(19) Europäisches Patentamt / European Patent Office / Office européen des brevets

(11) **EP 2 148 187 A1**

(12) **EUROPÄISCHE PATENTANMELDUNG**

(43) Veröffentlichungstag:
**27.01.2010 Patentblatt 2010/04**

(21) Anmeldenummer: **08013392.9**

(22) Anmeldetag: **25.07.2008**

(51) Int Cl.:
*G01N 21/64* (2006.01)          *G02B 21/06* (2006.01)
*G02B 3/00* (2006.01)           *G02B 21/16* (2006.01)
*G02B 21/08* (2006.01)

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder:
• **Roche Diagnostics GmbH**
  **68305 Mannheim (DE)**
  Benannte Vertragsstaaten:
  **DE**
• **F.HOFFMANN-LA ROCHE AG**
  **4070 Basel (CH)**
  Benannte Vertragsstaaten:
  **AT BE BG CH CY CZ DK EE ES FI FR GB GR HR HU IE IS IT LI LT LU LV MC MT NL NO PL PT RO SE SI SK TR**

(72) Erfinder:
• **Wietzorrek, Joachim**
  **6300 Zug (CH)**
• **Furlan, Alan**
  **6405 Immensee (CH)**

(74) Vertreter: **Herren, Barbara**
**Roche Diagnostics AG**
**Patent Department**
**Forrenstrasse**
**6343 Rotkreuz (CH)**

(54) **Anregungs- und Abbildungsoptik für die Fluoreszenzdetektion**

(57) Die Erfindung betrifft ein optisches Gerät (1) zum Abbilden von Fluoreszenz-Signalen (7) von einer Anordnung einer Vielzahl einzelner Detektionsorte, beispielsweise den Wells einer Mikrotiterplatte. Um sowohl die Lichtausbeute der Fluoreszenz-Anregung mit Anregungslicht (9) als die Lichtausbeute der Detektion der Fluoreszenz-Signale (7) zu verbessern, wird eine Arrayoptikanordnung (18) vorgeschlagen, die im Strahlengang zwischen der Feldlinse und den Detektionsorten angeordnet ist und ein Feldlinsenarray (19) mit Feldlinsen-Arrayelementen (20) und ein Pupillenlinsenarray (21) mit Pupillenlinsen-Arrayelementen (22) umfasst. Zur Verbesserung der Kanaltrennung und Störlichtunterdrückung umfasst die Arrayoptikanordnung (18) vorzugsweise ein Blendenarray (23) mit jeweils zwei Blendenöffnungen (24, 25) pro Detektionsort.

**Fig. 4**

**Beschreibung**

Die vorliegende Erfindung betrifft das Gebiet der DNA-Analyse. Insbesondere betrifft die vorliegende Erfindung eine Vorrichtung zum parallelen Abbilden von Fluoreszenzintensitäten von einer Vielzahl von Detektionsorten, und hierbei insbesondere die Anregungs- und Abbildungsoptik für die Fluoreszenzdetektion von Fluoreszenz-Signalen.

Dem Fachmann sind verschiedene Anwendungsfälle von Fluoreszenzmethoden und Fluoreszenztechniken zum Analysieren biologischer Proben bekannt. Im Falle elektrophoretischer Methoden werden Proteine oder DNA mit einer Fluoreszenzsonde markiert, um ihre elektrophoretischen Banden in Gelen oder Säulen sichtbar zu machen. Außerdem basieren die meisten bisherigen Anwendungsfälle von Biochips auf einer Fluoreszenzauslesung, wobei das spezifische Binden eines fluoreszenzmarkierten Zielmoleküls an ein Sondenmolekül, das auf einem festen Träger immobilisiert ist, überwacht wird. Anwendungen der DNA-Analyse in der flüssigen Phase umfassen Fluoreszenzhybridisierungssonden wie den Farbstoff SybrGreenl, der an doppelsträngige DNA bindet, oder FRET-Sonden (Fluoreszenz-Resonanz-Energietransfer), die zwei Fluoreszenzsonden und Energietransfer nutzen. Ein sehr wichtiger Anwendungsfall für Fluoreszenzmethoden in der flüssigen Phase ist die Mengenbestimmung von PCR-Produkten in Echtzeit, die sogenannte Echtzeit-PCR.

Die PCR (Polymerase Chain Reaction) ist ein Verfahren zum Amplifizieren oder Multiplizieren von Mengen doppelsträngiger DNA (Desoxyribonucleinsäure). In einer PCR-Apparatur hat ein Block zum thermischen Zyklieren eine oder mehrere Haltevorrichtungen mit Probengefäßchen (Wells), die eine Mischung aus Bestandteilen für eine Reaktion enthalten, mit der ausgehend von einer Startmenge der DNA mehr DNA gewonnen wird. Die Startbestandteile umfassen in einer wässrigen Lösung eine "Impfmenge" der DNA, bestimmte primäre DNA, DNA Elemente, Enzyme und andere Chemikalien. Die Temperatur des Blocks wird zwischen einer niedrigen Extensionsphase der PCR-Reaktion von ca. 60 °C, bei der alle DNA-Stränge in Doppelstränge rekombiniert sind, und einer höheren Denaturierungsphase von ca. 95 °C, in der die DNA denaturiert oder in Einzelstränge gespalten ist, zykliert. Ein solches Temperaturprogramm verdoppelt im Wesentlichen die DNA in jedem Zyklus, wodurch die Möglichkeit zum Replifizieren wesentlicher Mengen der DNA von einer kleinen Ausgangsmenge besteht. Die quantitative Bestimmung der DNA erfolgt mit Fluoreszenzmessungen, auch in Echtzeit.

In all diesen Fällen wird eine ein optisches Gerät, d.h. eine Anregungs- und Lesevorrichtung für Fluoreszenz benötigt, die Licht einer bestimmten Wellenlänge bereitstellt, um den Fluoreszenzmarker des Assays anzuregen, und die in der Lage ist, das Fluoreszenzlicht von dem Marker, das mit einer etwas unterschiedlichen Wellenlänge ausgestrahlt wird, zu erfassen. Ein großes Problem aller derartigen Fluoreszenz-Messgeräte ist die enorme Intensität des Anregungslichts im Vergleich zu dem Fluoreszenzlicht, das vom Farbstoff ausgestrahlt wird, und daher muss man sicherstellen, dass der Anregungsstrahl den Detektor nicht trifft, um die Fluoreszenz-Signale exakt überwachen zu können. Mit anderen Worten: Der Strahlengang (Lichtweg) des Anregungslichtes muss sich von dem Strahlengang (Lichtweg) des Fluoreszenzlichtes mindestens teilweise unterscheiden. Hierzu sind folgende Maßnahmen üblich: a) Eine spektrale Trennung durch Anregungs- und Emissionsfilter, deren Spektren sich nicht signifikant überlappen. b) Die Verwendung einer Auflicht- (oder auch Epi-) Beleuchtung bzw. einer seitlichen Beleuchtung. Dabei zeigt kein Strahl des Beleuchtungslichtes in eine Richtung, die direkt detektiert werden kann (Dunkelfeld). Man benötigt zumindest einen Reflex, elastische Streuung oder eben die Fluoreszenz (inelastische Streuung). Die Maßnahme b) wird in der Regel als Unterstützung für die Maßnahme a) angewendet, da die Filterblockung gemäß Maßnahme a) nicht perfekt ist.

Die Realisierung des Fluoreszenzprinzips ist ziemlich einfach, wenn nur eine Fluoreszenzsonde in der flüssigen Phase von z.B. einer Kapillare überwacht werden muss. Hier reicht z.B. eine Weißlichtquelle zusammen mit einem Satz dichroitischer Spiegel und Filter aus, um die Anforderungen zu erfüllen. Wenn jedoch mehr als ein Fluoreszenzmarker in der Probe vorhanden ist, muss eine laterale Verteilung der Stellen auf einem festen Träger oder die Fluoreszenz einer Mikrotiterplatte überwacht werden (ausgenommen wenn verschiedene Farbstoffe in einem einzigen Probengefäß vorhanden sind und detektiert werden), und die Anforderungen an das optische Gerät für die Fluoreszenz-Messung sind schwieriger zu erfüllen.

Grundsätzlich gibt es zwei verschiedene Strategien, die Fluoreszenz einer lateralen Verteilung von Detektionsorten anzuregen und zu überwachen. Die erste Strategie ist, die laterale Verteilung von Detektionsorten abzutasten, wobei nacheinander die einzelnen Detektionsorte jeder für sich analysiert werden. Die zweite Strategie ist, die gesamte Verteilung von Detektionsorten gleichzeitig zu beleuchten und die entsprechende Fluoreszenz auf eine Mehrzahl optischer Sensoren, z.B. einen CCD-Chip abzubilden. Die Abtaststrategie hat den offensichtlichen Nachteil, dass entweder der Träger in zwei Dimensionen bewegt werden muss (siehe z.B. WO 03/069391, DE 102 00 499), der Detektor relativ zu dem Träger bewegt werden muss (US 2002/159057), der Detektor sich in einer Dimension und der Träger sich in der anderen Dimension bewegen muss oder die Optik ein- oder zweidimensionale Abtastmittel aufweisen muss, d.h. Galvo-Spiegel. Andererseits besteht die Hauptschwierigkeit der zweiten Strategie, den gesamten Träger gleichzeitig zu beleuchten, darin, eine gleichmäßige Beleuchtung über die gesamte Verteilung von Detektionsorten sicherzustellen.

Eine Alternative zu der gleichmäßigen Beleuchtung über die gesamte Verteilung von Detektionsorten ist die Benutzung einer Anordnung von Lichtquellen, wobei jeder Detektionsort durch seine eigene Lichtquelle beleuchtet wird.

Die DE 101 31 687 beschreibt diese Strategie zum Auswerten von PCR in einem Thermozykler mit einer Vielzahl von Wells unter Benutzung eines Strahlteilers und einer Anordnung von LEDs zum Beleuchten. Die DE 101 55 142 beschreibt die Dunkelfeldüberwachung von Fluoreszenz-Signalen, wobei das Mikroarray auch von einer Anordnung von LEDs beleuchtet wird, jedoch wird in dieser Ausführungsform kein Strahlteiler benötigt.

Bezüglich der Anforderung, den Strahlengang des Anregungsstrahls und des Fluoreszenzlichts (der detektierten Fluoreszenz-Signale) mindestens teilweise zu trennen, gibt es wiederum zwei verschiedene Möglichkeiten. Die erste Möglichkeit ist die sogenannte Epi-Illumination, wobei Strahlteiler eingesetzt werden und der Anregungsstrahl und das Fluoreszenzlicht sich mindestens einen Teil des optischen Systems teilen. Die zweite Möglichkeit ist die Benutzung von schräger Beleuchtung. Hier ist der Anregungsstrahl auf eine solche Weise angeordnet, dass er einen bestimmten Winkel zur Normalen der Trägerfläche aufweist und die entsprechende Reflexion des Anregungsstrahls außerhalb des Öffnungswinkels des Erfassungssystems liegt (z.B. US 2002/0005493 A1, EP 1 275 954 A2).

Die US 2003/0011772 A1 beschreibt ein optisches Gerät zum gleichzeitigen Beobachten einer Vielzahl von Fluoreszenz-Farbstoffen in einer Sonde unter Benutzung eines Strahlteilers. Die DE 197 48 211 A1 offenbart ein System zum gleichzeitigen Überwachen der Fluoreszenz-Signale, die in den Wells einer Mikrotiterplatte erzeugt werden, unter Benutzung eines Strahlteilers, einer Feldlinse und einer Anordnung von Linsen, die das Licht in jedes Well fokussieren. Die Erfassung wird durch Abbilden des Lichtes auf eine Anordnung von Photodioden oder auf einen CCD-Chip durchgeführt. Das Fluoreszenz-Licht, das in dieser Ausführungsform des Systems gesammelt wird, bestimmt sich aus der Menge an Farbstoffen, die durch den Lichtkegel der fokussierenden Linse angeregt wird, und hängt daher vom Füllstand des Wells ab.

Die WO 99/60381 beschreibt ein Gerät zum gleichzeitigen Überwachen von PCR-Reaktionen in einer Vielzahl von Wells in einem Block, dessen Temperatur zyklisch geregelt wird. Die optischen Komponenten dieses Gerätes umfassen abermals einen Strahlteiler, eine Feldlinse, eine Anordnung von Linsen für die Wells, die einzelne Lichtstrahlen in jedes Well fokussieren, und ein Erfassungsmittel, das das ausgestrahlte Licht auf z.B. einen CCD-Detektor fokussiert. Aufgrund der Notwendigkeit einer Anordnung von Linsen für die Wells sind die Größe und die laterale Dichte der einzelnen Detektionsorte begrenzt, die Lichtausbeute dieser Anordnung ist gering und es findet ein erhebliches Übersprechen zwischen den einzelnen detektierten Wells statt, d.h. die Kanaltrennung ist gering.

Die JP 2002014044 beschreibt eine fluorometrische Vorrichtung zum Überwachen von Fluoreszenz, die in einer Vielzahl von Wells erzeugt wird. Die optischen Komponenten umfassen einen Strahlteiler und ein Linsensystem zum gemeinsamen Beleuchten der Wells mit Licht, das parallel zur Tiefenrichtung der Wells ist. Das bildgebende optische System verdichtet das Licht jedoch auf ein Erfassungsmittel. Die US 6,498,690 B1 offenbart ein Verfahren zum Abbilden von Assays mit einem Objektiv, das eine telezentrische Linse aufweist. Die US 6,246,525 B1 beschreibt eine Abbildungsvorrichtung zum Abbilden eines Probenträgers mit einer Fresnellinse. Die EP 0 987 540 A offenbart eine Abbildungsvorrichtung für fluoreszierende Assays, die eine Abbildungseinheit aufweist, die einen Satz telezentrischer Linsen umfasst. Die EP 1 406 082 A beschreibt eine Fluoreszenz-Lesevorrichtung mit telezentrischer Beleuchtung.

Die EP 1 681 555 B1 beschreibt eine verbesserte Vorrichtung zum gleichzeitigen Überwachen von Fluoreszenz-Signalen von einer lateralen Verteilung von Detektionsorten, wobei der Strahlengang in Bezug auf die gleichmäßige Beleuchtung und exakte Erfassung optimiert wird. Sie umfasst eine Abbildungslinsenanordnung, die so angeordnet ist, dass sie Fluoreszenz-Signale von der Feldlinse zum optischen Sensor überträgt, und weist die Besonderheit auf, dass der Strahlengang des Anregungslichts und der Strahlengang der Fluoreszenz-Signale von der Vielzahl einzelner Detektionsorte auf der Objektseite der Feldlinse telezentrisch sind.

Die EP 1 681 556 B1 beschreibt eine ähnliche, weiter verbesserte Vorrichtung, wobei die Feldlinse so angeordnet ist, dass sie Anregungslicht mit einem Einfallswinkel zum ebenen Träger der Anordnung einer Vielzahl von einzelnen Detektionsorten erzeugt, der größer als 0° ist.

Wenngleich mit diesen Vorrichtungen gute Ergebnisse erzielt werden konnten, hat es sich in der Praxis erwiesen, dass die Lichtausbeute noch verbessert werden kann, um noch kleinere Fluoreszenz-Signale detektieren zu können oder Fluoreszenz-Signale mit einem besseren Signal-Rausch-Verhältnis oder in besserer Auflösung detektieren zu können.

Die Aufgabe der vorliegenden Erfindung besteht darin, eine verbesserte Vorrichtung bzw. ein verbessertes optisches Gerät zum gleichzeitigen Überwachen von Fluoreszenz-Signalen von einer lateralen Verteilung einer Vielzahl einzelner Detektionsorte bereitzustellen, indem der Strahlengang in Bezug auf eine höhere Lichtausbeute optimiert wird. In einem Aspekt der vorliegenden Erfindung bezieht sich das zu lösende Problem auf Verbesserungen in der Überwachung von Echtzeit-Multiplex-PCR in einem Mikrotiterplattenformat.

Folglich richtet sich die Erfindung auf ein optisches Gerät zum Abbilden von Fluoreszenz-Signalen von einer Anordnung einer Vielzahl einzelner Detektionsorte mit einer gleichmäßige Anregung über den gesamten Bereich der Anordnung, exaktem Abbilden der entsprechenden Fluoreszenz-Signale und einer hoher Lichtausbeute.

Genauer gesagt richtet sich die Erfindung auch auf ein optisches Gerät zum gleichzeitigen Analysieren einer Vielzahl von PCR-Amplifikationen in Echtzeit, die in den Wells einer Mikrotiterplatte stattfinden, oder zum Abbilden der Fluoreszenz-Intensität eines Mikroarrays als Maß für spezifische Wechselwirkungen zwischen Ziel und Sonde.

Diese Aufgabe wird erfindungsgemäß durch ein optisches Gerät mit den Merkmalen des Patentanspruchs 1 gelöst. Bevorzugte Ausgestaltungen ergeben sich aus den abhängigen und den nebengeordneten Patentansprüchen und der nachfolgenden Beschreibung mit zugehörigen Zeichnungen.

Ein erfindungsgemäßes optisches Gerät zum Abbilden von Fluoreszenz-Signalen von einer Anordnung einer Vielzahl einzelner Detektionsorte umfasst also

- eine Haltevorrichtung zum Halten eines ebenen Trägers mit einer Anordnung einer Vielzahl einzelner Detektionsorte;

- mindestens eine Lichtquelle zum Ausstrahlen von Licht mit mindestens einer Anregungsfrequenz;

- einen optischen Sensor, der so angeordnet ist, dass er Fluoreszenz-Signale von der Anordnung einer Vielzahl einzelner Detektionsorte empfängt, und der so ausgebildet ist, dass er computerlesbare Primärdaten erzeugt;

- eine Feldlinse, die so angeordnet ist, dass sie Anregungslicht von der Lichtquelle zu der Anordnung einer Vielzahl einzelner Detektionsorte und Fluoreszenz-Signale von der Anordnung einer Vielzahl einzelner Detektionsorte zum optischen Sensor überträgt;

- eine Anregungslinsenanordnung, die so angeordnet ist, dass sie Anregungslicht von der Lichtquelle zur Feldlinse überträgt; und

- eine Abbildungslinsenanordnung, die so angeordnet ist, dass sie Fluoreszenz-Signale von der Feldlinse zum optischen Sensor überträgt;

und weist die Besonderheit auf, dass

- sie eine Arrayoptikanordnung umfasst,

- die ein Feldlinsenarray mit Feldlinsen-Arrayelementen und ein Pupillenlinsenarray mit Pupillenlinsen-Arrayelementen umfasst,

- wobei die Arrayoptikanordnung im Strahlengang zwischen der Feldlinse und der Anordnung einer Vielzahl einzelner Detektionsorte angeordnet ist.

In einer bevorzugten Ausbildung sind der Strahlengang des Anregungslichts und der Strahlengang der Fluoreszenz-Signale von der Vielzahl einzelner Detektionsorte auf der Objektseite der Feldlinse telezentrisch, d.h. das optische Gerät verwendet eine telezentrische Pupillenlage. Genauer ausgedrückt ist im Rahmen der Erfindung der Strahlengang auf der Objektseite der Feldlinse und auf der Objektseite des Feldlinsenarrays telezentrisch. Auf der anderen Seite, d.h. zwischen dem Pupillenlinsenarray und der Anordnung einer Vielzahl einzelner Detektionsorte, ist der Strahlengang nicht mehr telezentrisch. Hier wird auch keine Telezentrie mehr benötigt. Jeder Detektionsort "sieht" durch die periodische Arrayoptikanordnung die gleiche, nicht-telezentrische Pupille für Beleuchtung und Detektion. Im Stand der Technik ist die Detektionsoptik telezentrisch auf der Seite der Feldlinse, aber nicht auf Seite des optischen Sensors, und die Beleuchtungsoptik ist telezentrisch auf der Seite der Feldlinse und auch auf der Seite eines ggf. verwendeten Lichtmischstabes.

Die Erfindung ermöglicht nicht nur eine höhere Lichtausbeute, um noch kleinere Fluoreszenz-Signale oder Fluoreszenz-Signale mit einem verbesserten Signal-Rausch-Verhältnis oder in besserer Auflösung detektieren zu können, sondern zahlreiche weitere Vorteile, z.B. auch eine schnellere Durchführung der Fluoreszenz-Messung. Ferner werden nach dem Stand der Technik Hochleistungslampen mit hoher Leuchtdichte verwendet, z.B. Xenon-Bogenlampen, um die bislang geringe Lichtausbeute zu kompensieren. Derartige Hochleistungslampen haben jedoch nicht nur eine hohe thermische Verlustleistung, die eine aufwendige Wärmeabfuhr oder Kühlung erfordert, sondern auch eine relativ kurze Lebensdauer, die meist in der Größenordnung von ca. 500 Stunden liegt. Entsprechend häufig ist im Stand der Technik ein Lampenwechsel erforderlich. Wenn die Lampe gar während einer laufenden Messung, z.B. einer Echtzeit-PCR, ausfällt, kann sogar die gesamte Messung einer bestimmten Probe verloren gehen. Der Signalgewinn und die Empfindlichkeitsverbesserung durch die Erfindung vermeidet diese Probleme und schafft auch die Möglichkeit, schwächere und damit langlebigere Lampen und auch alternative Lichtquellen, z.B. LEDs mit einer höheren Lebensdauer und Zuverlässigkeit, zu verwenden.

Ein bedeutsamer Vorteil der Erfindung ist demnach die Verlängerung der Lebensdauer der verwendeten Lichtquelle.

Im Kontext dieser Erfindung fasst eine Anordnung einer Vielzahl einzelner Detektionsorte Objekte zusammen, die aus zwei oder mehr räumlich getrennten und lateral verteilten Detektionsorten bestehen. Bei den Detektionsorten kann es sich z.B. um Wells einer Mikrotiterplatte oder um funktionalisierte Flächenbereiche eines Objektträgers oder Glasträgers handeln. In der Mehrzahl der Fälle wird die Anordnung einer Vielzahl einzelner Detektionsorte gleichförmig, gleichmäßig, auf einheitliche Art und Weise oder in einem bestimmten Raster angeordnet sein und jeder Detektionsort wird einen anderen Inhalt aufweisen, um eine Multiplex-Analyse durchzuführen.

Im Rahmen dieser Erfindung ist der ebene Träger der Anordnung bevorzugt eine ebene feste Phase. Im Falle eines Mikroarrays ist der ebene Träger der Anordnung die Fläche dieser ebenen festen Phase, wo die Detektionsorte angeordnet sind. Im Falle einer Mikrotiterplatte ist der ebene Träger der Anordnung die Ebene, wo die Öffnungen der Wells angeordnet sind. Der ebene Träger der Anordnung ist durch eine Haltevorrichtung fixiert, um jeden einzelnen Detektionsort an der Sollposition innerhalb des Strahlengangs zu fixieren.

Im Rahmen dieser Erfindung umfasst der Ausdruck Lichtquelle Leuchtmittel, die Licht mit einer einzigen Frequenz oder mit einer Vielzahl verschiedener Frequenzen ausstrahlen. Außerdem kann die Lichtquelle eine Anordnung von mehr als nur einem Leuchtmittel sein.

Im Kontext dieser Erfindung ist ein optischer Sensor (Detektor, Wandler) eine Vorrichtung zum Umwandeln von sichtbarem Licht in elektrische Signale, die von einem Computer verarbeitet werden können. Der optische Sensor kann einen einzelnen oder mehrere optische Sensoren umfassen. Eine bevorzugte Ausführungsform ist ein optischer Sensor mit mehreren optischen Sensoren, die in einer räumlich verteilten Anordnung platziert sind, die vorzugsweise entsprechend der Anordnung der Vielzahl einzelner Detektionsorte ausgebildet ist. Bevorzugte Ausführungsformen sind Halbleiterbauelemente, beispielsweise Photodioden, oder insbesondere ladungsgekoppelte Bauelemente, beispielsweise ein CCD-Chip.

Im Rahmen dieser Erfindung ist eine telezentrische Optik eine Optik mit einer Aperturblende, die durch die optischen Elemente zwischen der Aperturblende und dem Objekt in die Unendlichkeit projiziert wird. Mit anderen Worten sind die Hauptstrahlen einer telezentrischen Optik im Objektraum quasiparallel. Die Bezeichnung Hauptstrahlen wird für alle Strahlen benutzt, die durch das Zentrum der Aperturblende gehen. Die Bezeichnungen Objekt, Objektebene und Objektraum werden benutzt, um den ebenen Träger mit der Anordnung einer Vielzahl einzelner Detektionsorte zu beschreiben. In der telezentrischen Optik weisen die Anregungslinsenanordnung und die Abbildungslinsenanordnung beide ihre eigene Aperturblende auf. Die telezentrische Optik ist telezentrisch für den Strahlengang der Anregung und den Strahlengang der Erfassung der Fluoreszenz-Signale auf der Feldlinsenseite der Arrayoptikanordnung. Jeder Objektpunkt in einer Ebene senkrecht zur optischen Achse entspricht einem Hauptanregungsstrahl sowie einem Haupterfassungsstrahl. Da alle Hauptanregungsstrahlen und auch alle Haupterfassungsstrahlen quasiparallel sind, wird eine gute gleichmäßige laterale Verteilung in der Objektebene sichergestellt und die Detektionsorte in der Mitte der Anordnung sind vergleichbar mit denen am Rand der Anordnung.

In der vorliegenden Erfindung weist eine telezentrische Optik immer eine Feldlinse auf. Im Kontext dieser Erfindung ist die Feldlinse eine Linse, die dem Objekt am nächsten ist (bezogen auf eine Ausführungsform des optischen Gerätes ohne die erfindungsgemäße Arrayoptikanordnung), von allen Anregungslichtstrahlen und allen Fluoreszenz-Signalen durchlaufen wird, eine oder mehrere Komponenten aufweisen kann und zusammen mit zusätzlichen optischen Komponenten der Vorrichtung zur Telezentrizität im Objekt- und/oder im Bildraum der Vorrichtung beiträgt. Die eine oder die mehreren Komponenten (Achromat) der Feldlinse können selbst Linsenelemente sein, die räumlich getrennt sind. Die Feldlinse bestimmt das Sehfeld des optischen Gerätes.

Im Rahmen dieser Erfindung ist eine telezentrische Optik bevorzugt ferner eine Optik, die eine sehr kleine Apertur aufweist und somit eine hohe Tiefenschärfe bereitstellt. Mit anderen Worten: das telezentrische Licht einer solchen telezentrischen Optik ist für alle Punkte quer über das Objekt hinweg, die zu der optischen Achse im Objekt- und/oder Abbildungsraum parallel sind, quasiparallel zu den Hauptstrahlen. Daher ist die Qualität einer Anregungsoptik oder einer Abbildungsoptik, bei der Telezentrie im Objektraum benutzt wird, für den Abstand eines bestimmten Objektpunktes von der Optik unempfindlich. Die Apertur einer telezentrischen Optik wird ins Unendliche abgebildet. Die Benutzung von telezentrischem Licht stellt außerdem eine gute seitliche Homogenität quer über den Lichtstrahl hinweg sicher, und die Detektionsorte, die sich in der Mitte der Anordnung befinden, sind mit denjenigen vergleichbar, die sich an dem Rand der Anordnung befinden.

Die Feldlinse der vorliegenden Erfindung überträgt Anregungslicht von der Lichtquelle zu der Anordnung einer Vielzahl einzelner Detektionsorte und überträgt Fluoreszenz-Signale von der Anordnung einer Vielzahl einzelner Detektionsorte zum optischen Sensor. Dies schließt nicht aus, dass zusätzliche optische Komponenten in den Strahlengang eingebracht werden, z.B. zwischen der Lichtquelle und der Feldlinse, zwischen der Feldlinse und dem optischen Sensor oder zwischen der Feldlinse und der Anordnung einer Vielzahl einzelner Detektionsorte (insbesondere eine erfindungsgemäße Arrayoptikanordnung).

Der Einfallswinkel $\alpha$ ist definiert als der Winkel zwischen den quasiparallelen Hauptstrahlen des Anregungslichtstrahls und der Normalen der Grenzfläche, die im Rahmen dieser Erfindung der Träger der Anordnung ist.

Gemäß einem abgewandelten Aspekt der vorliegenden Erfindung richtet sie sich auf ein optisches Gerät zum Abbilden von Chemilumineszenz- oder Biolumineszenz-Signalen von einer Anordnung einer Vielzahl einzelner Detektionsorte, umfassend

- eine Haltevorrichtung zum Halten eines ebenen Trägers mit einer Anordnung einer Vielzahl einzelner Detektionsorte;

- einen optischen Sensor, der so angeordnet ist, dass er Chemilumineszenz- oder Biolumineszenz-Signale von der Anordnung einer Vielzahl einzelner Detektionsorte empfängt, und der so ausgebildet ist, dass er computerlesbare Primärdaten erzeugt;

- eine Feldlinse, die so angeordnet ist, dass sie Chemilumineszenz- oder Biolumineszenz-Signale von der Anordnung einer Vielzahl einzelner Detektionsorte zum optischen Sensor überträgt;

- eine Abbildungslinsenanordnung, die so angeordnet ist, dass sie Chemilumineszenz- oder Biolumineszenz-Signale von der Feldlinse zum optischen Sensor überträgt;

wobei das optische Gerät die Besonderheit aufweist, dass

- es eine Arrayoptikanordnung umfasst,

- die ein Feldlinsenarray mit Feldlinsen-Arrayelementen und ein Pupillenlinsenarray mit Pupillenlinsen-Arrayelementen umfasst,

- wobei die Arrayoptikanordnung im Strahlengang zwischen der Feldlinse und der Anordnung einer Vielzahl einzelner Detektionsorte angeordnet ist.

Ein weiterer Aspekt dieser Erfindung ist ein Echtzeit-PCR-Gerät umfassend

- ein optisches Gerät gemäß der Erfindung und

- Mittel zum Heizen und Kühlen eines Trägers mit einem oder mehreren Wells, von denen jeder ein Reaktionsgemisch enthält, das zu einer PCR-Reaktion in der Lage ist.

Im Rahmen dieser Erfindung umfassen die Mittel zum Heizen und Kühlen beliebige Mittel, die in der Lage sind, die Temperatur der Anordnung einer Vielzahl einzelner Detektionsorte auf eine zyklische Art und Weise zu steuern und zu ändern, um eine zyklische PCR-Amplifikation von Nukleinsäuren durchzuführen. Jeder PCR-Zyklus umfasst mehrere verschiedene Schritte: Einen Annealingschritt mit einer Absenkung der Temperatur, einen enzymatischen Amplifikationsschritt bei relativ niedrigen Temperaturen zusammen mit einem Detektionsschritt unter Benutzung fluoreszierender Farbstoffen und einen Schmelzschritt bei hohen Temperaturen. Vorzugsweise kann die Haltevorrichtung in thermischem Kontakt mit dem ebenen Träger der Anordnung einer Vielzahl einzelner Detektionsorte stehen und geheizt und gekühlt werden.

In der vorliegenden Erfindung fasst eine Anordnung einer Vielzahl einzelner Detektionsorte bevorzugt einzelne Objekte eines Assays zusammen, die sich aus zwei oder mehr Assays zusammensetzen, die zum Realisieren einer parallelen Analyse räumlich getrennt sind. Diese Assays können z.B. in Wells einer Mikrotiterplatte oder auf funktionalisierten Flächenbereichen eines Glasträgers durchgeführt werden. In der Mehrzahl der Fälle wird die Anordnung einer Vielzahl einzelner Assays auf eine einheitliche Art und Weise angeordnet werden und jedes Assay wird einen unterschiedlichen Inhalt aufweisen, um eine Multiplex-Analyse durchzuführen. Im Falle von DNA-Mikroarrays ist jede Stelle der Anordnung mit einem Oligomer, das eine bestimmte Sequenz hat, funktionalisiert, wohingegen im Falle von Immunassays jede Stelle der Anordnung mit z.B. Proteinen, die verschiedene Affinitäten haben, funktionalisiert ist. Im Falle von Mikrotiterplatten wird in jedem Well z.B. eine andere PCR durchgeführt.

Überdies wird die Bezeichnung Strahlengang in der vorliegenden Erfindung zum Zusammenfassen aller Bereiche benutzt, die der Lichtstrahl auf seinem Weg von der Lichtquelle durch mindestens die Feldlinse zu der Anordnung einer Vielzahl einzelner Assays und von der Anordnung einer Vielzahl einzelner Assays durch mindestens die Feldlinse zum optischen Sensor durchläuft.

Ein weiterer Gegenstand der vorliegenden Erfindung ist ein System zum gleichzeitigen Durchführen und Überwachen einer oder mehrerer PCR-Reaktionen in Echtzeit, umfassend

- eine Multiwell-Platte als eine Anordnung einer Vielzahl einzelner Detektionsorte, von denen jeder ein Reaktionsgemisch enthält, das zu einer PCR-Reaktion in der Lage ist,

- fluoreszierende DNA-Bindungseinheiten und

- ein Echtzeit-PCR-Gerät gemäß der Erfindung, umfassend ein optisches Gerät gemäß der Erfindung zum Beleuchten der Vielzahl einzelner Detektionsorte der Multiwell-Platte mit Licht, vorzugsweise mit telezentrischem Licht, und zum Erfassen der Fluoreszenz-Signale von jedem Well der Multiwell-Platte durch einen optischen Sensor, der so angeordnet ist, dass er die entsprechenden Fluoreszenz-Signale empfangen kann, um computerlesbare Primärdaten zu erzeugen.

In der vorliegenden Erfindung sind die fluoreszierenden DNA-Bindungseinheiten beliebige Fluoreszenz-Farbstoffe oder Anordnungen von Fluoreszenz-Farbstoffen zur Echtzeiterfassung von amplifizierter DNA, die dem Fachmann bekannt sind und die zum Erfassen amplifizierter DNA benutzt werden können, z.B. doppelsträngige DNA-spezifische bindende Farbstoffe, fluoreszierend markierte Hybridisierungssonden, die nur beim Binden an ihre Zielnukleinsäure Fluoreszenz ausstrahlen, TagMan-Probes, Molecular Beacons, Einzelmarkersonden (SLP) oder FRET-Hybridisierungssonden.

Noch ein weiterer Gegenstand der vorliegenden Erfindung ist ein Verfahren zum Amplifizieren, Detektieren und/oder Quantifizieren einer Vielzahl von DNA-Zielsequenzen, umfassend

- Bereitstellen einer Zusammensetzung oder eines Reaktionsgemisches, das in der Lage ist, PCR-Reaktionen durchzuführen;

- Behandeln des Reaktionsgemisches gemäß einem thermozyklischen Protokoll, so dass eine Amplifikation der Vielzahl von DNA-Zielsequenzen stattfinden kann; und

- Ermitteln des Vorhandenseins und der Anzahl von jeder DNA-Sequenz mindestens einmal nach mehreren Amplifikationszyklen unter Benutzung von fluoreszierenden DNA-Bindungseinheiten und eines Echtzeit-PCR-Gerätes gemäß der Erfindung.

Die Zusammensetzung oder das Reaktionsgemisch, das in der Lage ist, PCR-Reaktionen durchzuführen, umfasst im Rahmen dieser Erfindung Puffer, Nukleotide, Enzyme, Primer und die Fuoreszenz-DNA-Bindungseinheiten.

Ein thermozyklisches Protokoll ist das Protokoll, das die chronologische Temperaturbehandlung der PCR-Zusammensetzung, die Schmelz- und Annealingtemperaturen, die Anzahl der Amplifikationszyklen sowie die Zeitdauern für Aufheizen und Abkühlen festlegt.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Es zeigen:

Figur 1     eine schematische Darstellung einer Ausführungsform des optischen Gerätes nach dem Stand der Technik,

Figur 2     einen Heizdeckel einer PCR-Multiwellplatte mit Bohrungen zur Beleuchtung und optischen Analyse der Proben in den Wells,

Figur 3     eine schematische Darstellung eines erfindungsgemäßen Details einer Ausführungsform des optischen Gerätes gemäß der Erfindung,

Figur 4     eine erfindungsgemäße Arrayoptikanordnung bestehend aus Feldlinsenarray, Blendenarray und Pupillenlinsenarray,

Figur 5     einen Schnitt durch einen Kanal einer erfindungsgemäßen Arrayoptikanordnung mit dem Strahlengang für Fluoreszenzanregung,

Figur 6     einen Schnitt durch einen Kanal einer erfindungsgemäßen Arrayoptikanordnung mit dem Strahlengang für Fluoreszenzdetektion,

Figur 7     einen Schnitt durch einen Kanal einer erfindungsgemäßen Arrayoptikanordnung mit einer Blende mit zwei getrennten Blendenöffnungen für Fluoreszenzanregung und Fluoreszenzdetektion,

Figur 8     eine Aufsicht auf den Heizdeckel von Figur 2 als Objekt für die Abbildung durch die Arrayoptikanordnung,

Figur 9      das Bild des Heizdeckels von Figur 8 nach der Abbildung durch die Arrayoptikanordnung,

Figur 10      die Strahlrichtungen der Detektionsoptik und der Beleuchtungsoptik am Ort des Feldlinsenarrays sowie die Einhüllende aller Richtungen der Arrayoptikanordnung,

Figur 11      einen Ausschnitt der von vier benachbarten Kanälen der Arrayoptikanordnung mit der Darstellung der Strahlbüschel von jeweils drei Feldpunkten,

Figur 12      ein Blendenarray zum Maskieren der Blendenbilder der Arrayoptikanordnung,

Figur 13      ein Bild eines quadratischen Feldlinsen-Arrayelements in einem kreisrunden Loch des Heizdeckels,

Figur 14      eine Arrayoptikanordnung mit quadratisch berandeten Feldlinsen-Arrayelementen in einer Ansicht von oben und

Figur 15      die Arrayoptikanordnung von Figur 14 in einer Ansicht von unten.

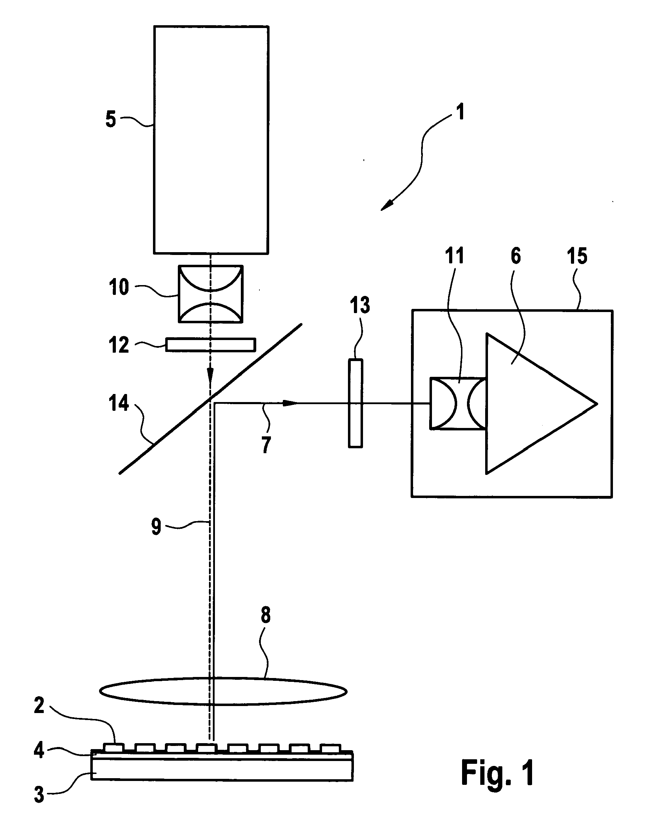

Die Figur 1 zeigt eine schematische Darstellung einer Ausführungsform eines optischen Gerätes 1 zum Abbilden von Fluoreszenz-Signalen von einer Vielzahl einzelner Detektionsorte 2 nach dem Stand der Technik, beispielsweise gemäß der EP 1 681 555 B1 oder EP 1 681 556 B1. Das optische Gerät 1 dient zum gleichzeitigen Überwachen und Detektieren von PCR-Amplifikationen (Polymerase-Kettenreaktion-Amplifikationen), die in den einzelnen Wells einer Mikrotiterplatte stattfinden. Die Wells der Multiwellplatte bilden somit eine Anordnung einer Vielzahl einzelner Detektionsorte 2.

Das optische Gerät 1 zum Abbilden von Fluoreszenz-Signalen von einer Anordnung einer Vielzahl einzelner Detektionsorte 2 umfasst eine Haltevorrichtung 3 zum Halten eines ebenen Trägers 4 mit einer Anordnung einer Vielzahl einzelner Detektionsorte 2, mindestens eine Lichtquelle 5 zum Ausstrahlen von Licht mit mindestens einer Anregungsfrequenz, einen optischen Sensor 6, der so angeordnet ist, dass er Fluoreszenz-Signale 7 von der Anordnung einer Vielzahl einzelner Detektionsorte 2 empfängt, und der so ausgebildet ist, dass er computerlesbare Primärdaten erzeugt, eine Feldlinse 8, die so angeordnet ist, dass sie Anregungslicht 9 von der Lichtquelle 5 zu der Anordnung einer Vielzahl einzelner Detektionsorte 2 und Fluoreszenz-Signale 7 von der Anordnung einer Vielzahl einzelner Detektionsorte 2 zum optischen Sensor 6 überträgt, eine Anregungslinsenanordnung 10, die so angeordnet ist, dass sie Anregungslicht 9 von der Lichtquelle 5 zur Feldlinse 8 überträgt, und eine Abbildungslinsenanordnung 11, die so angeordnet ist, dass sie Fluoreszenz-Signale 7 von der Feldlinse 8 zum optischen Sensor 6 überträgt.

Dem Fachmann ist eine große Anzahl von Geräten bekannt, die in der Lage sind, Fluoreszenz-Signale 7 abzubilden. Wenn das optische Gerät 1 zum gleichzeitigen Abbilden der Fluoreszenz-Signale 7 von einer Anordnung einer Vielzahl einzelner Detektionsorte 2, z.B. den Wells einer Mikrotiterplatte oder der Stellen eines Mikroarrays, in der Lage sein soll, muss man gewährleisten, dass die Anregung der Farbstoffe mit Anregungslicht 9 und die Abbildung der Fluoreszenz-Signale 7 in der Mitte der Anordnung und an den Rändern der Anordnung vergleichbar sind. Überdies ist, selbst wenn die Anforderung einer gleichmäßigen Intensitätsverteilung über den Lichtstrahl erfüllt ist, die Ausrichtung des ebenen Trägers 4 immer noch wichtig, um sicherzustellen, dass der Träger 4 als Ganzes in der Fokalebene der Abbildungsoptik und auch der Anregungsoptik liegt. Einige besondere Probleme ergeben sich außerdem, wenn der Träger 4 bzw. die von dem optischen Gerät 1 detektierte Vielzahl einzelner Detektionsorte 2 eine Tiefe aufweist, wie im Fall der Wells von Mikrotiterplatten.

Eine Lösung für die oben angeführten Probleme ist die Benutzung telezentrischer Optiken. In einer telezentrischen Optik sind die Hauptstrahlen, die aus den einzelnen Objektpunkten austreten, quasiparallel. Eigentlich wären die Hauptstrahlen sogar streng parallel, wenn es keine optischen Aberrationen gäbe. Letztere bezeichnet man dann als Telezentriefehler.

Jeder Objektpunkt sieht natürlich nicht nur den Hauptstrahl, der aus dem Zentrum der Pupille kommt, sondern auch Randstrahlen, die von Rand der Pupille kommen, und auch die Strahlen, die zwischen Randstrahl und Hauptstrahl liegen. Jedem Objektpunkt ist also ein Strahlenbüschel zugeordnet, das innerhalb eines Kegels liegt. Die Achse dieses Kegels ist der Hauptstrahl. Der Kegel hat idealerweise einen kleinen Öffnungswinkel. Eigentlich gibt es sogar zwei Kegel, nämlich einen für die Beleuchtung und einen für die Detektion. Infolge der telezentrischen Optik werden alle Objektpunkte innerhalb eines endlichen Sichtfeldes mit ungefähr derselben Perspektive und derselben Intensität beobachtet, mit anderen Worten weist die telezentrische Optik eine große Tiefenschärfe und ein gleichmäßiges Anregungs- oder Abbildungsprofil auf.

Die Eigenschaften einer Optik können anhand ihrer numerischen Apertur (NA) charakterisiert werden, die zum Realisieren einer hohen Empfindlichkeit und einer guten Abbildungsauflösung im Allgemeinen so groß wie möglich sein sollte:

$$NA = n \cdot \sin\theta$$

wobei n der Brechungsindex des Mediums und θ der Aperturwinkel ist.

Zur Konzeption eines optischen Gerätes 1 zur telezentrischen Anregung einer lateralen Verteilung von Detektionsorten 2 und zum telezentrischen Abbilden von Fluoreszenz-Signalen 7 von den Detektionsorten 2 muss man mehrere Aspekte berücksichtigen.

Einerseits sollte der NA-Wert so groß wie möglich sein, weil ein kleiner NA-Wert der Abbildungsoptik einer schlechten Abbildungsauflösung entspricht und ein kleiner NA-Wert für die Anregungsoptik einer Vergeudung von Beleuchtungsleistung für die Anregung entspricht. Andererseits kann eine Minimierung des NA-Wertes die Tiefenschärfe der telezentrischen Optik erhöhen, was bedeutsam sein kann, wenn die Anordnung einzelner Detektionsorte 2 eine bestimmte Tiefe aufweist, wie in dem Fall von Mikrotiterplatten. Überdies wird auch, von einem kommerziellen Standpunkt aus gesehen, ein kleiner NA-Wert bevorzugt, weil eine Optik mit kleiner Apertur im Allgemeinen geringere Herstellungskosten erfordert.

Wenn das telezentrische optische Gerät 1 für einen ganzen Frequenzbereich anwendbar sein soll, sollte die Optik auch achromatisch sein. Für die Fluoreszenz-Abbildung selbst müssen sogar noch mehr Anforderungen berücksichtigt werden, da die Fluoreszenz-Abbildung die richtige Skalierung für die korrekte Nachbildung der lateralen Verteilung von Detektionsorten 2 auf dem optischen Sensor 6 aufweisen muss. Außerdem müssen Abbildungsfehler wie sphärische oder chromatische Aberration, Koma, Astigmatismus oder Bildfeldwölbung berücksichtigt werden.

Es gibt mehrere Arten, telezentrische Optiken zu schaffen. Im Allgemeinen wird eine telezentrische Optik als Multielement-Linse ausgeführt, wo mehrere Linsen aufeinanderfolgend im Strahlengang angeordnet sind. Eine telezentrische Optik kann als telezentrisch in der Objektebene oder als telezentrisch in der Bildebene oder als telezentrisch in beiden Ebenen - eine sogenannte doppelt telezentrische Optik - ausgebildet werden. Überdies ist es möglich, ein Objekt mit telezentrischem Licht zu beleuchten und/oder ein Objekt auf eine telezentrische Art und Weise zu detektieren. Im Allgemeinen reicht es aus, eine Optik mit Telezentrizität in der Objektebene bereitzustellen, da dies bereits eine lateral und auch in die dritte Dimension gleichmäßige Beleuchtung des gesamten Objekts und die exakte Sammlung von Licht, das von dem Objekt ausgestrahlt wird, sicherstellt.

Im Rahmen dieser Erfindung erfolgen sowohl die Anregung der Vielzahl einzelner Detektionsorte 2 als auch die Abbildung der von der Vielzahl einzelner Detektionsorte 2 ausgehenden Fluoreszenz-Signale 7 bevorzugt auf eine telezentrische Art und Weise.

Ein zentraler Bestandteil aller telezentrischen Optiken ist die Feldlinse 8. Diese Linse ist dem Objekt am nächsten und bestimmt den Durchmesser des Sehfeldes des Gerätes 1. Daher nimmt der Durchmesser dieser Linse gewöhnlich zu, wenn die Anordnung einer Vielzahl einzelner Detektionsorte 2 über einen großen Bereich verteilt ist. Feldlinsen 8 gibt es als Singuletts (eine einzige Linse) oder als Achromaten umfassend z.B. zwei aneinander geklebte Linsen. Eine besondere Feldlinse 8, die ebenso für diese Erfindung benutzt werden kann, ist eine Fresnellinse. Eine Fresnellinse weist eine besondere, komplexe Krümmung mit einer Vielzahl sich verjüngender Bereiche auf mindestens einer optisch wirksamen Fläche auf, die dieselben telezentrischen Eigenschaften wie eine Feldlinse 8 bereitstellt. In den meisten Fällen weisen Fresnellinsen nur eine Fläche mit einer Vielzahl sich verjüngender Bereiche auf, die von einer ebenen, zur optischen Achse senkrechten Fläche getragen wird, und sind daher dünner im Vergleich zu normalen Feldlinsen. Auch sogenannte Freiformlinsen können verwendet werden. In der Praxis gestaltet man Feldlinsen oft asphärisch, um den Telezentriefehler zu minimieren. Normalerweise sind diese Asphären aber rotationssymmetrisch. Letzteres ist dann keine Freiformfläche.

Besonders für die eine bestimmte Tiefe aufweisenden Wells einer Mikrotiterplatte hat ein großer Einfallswinkel die Auswirkung, dass nur ein Teil des Innenbereichs des Wells beleuchtet werden wird. Infolgedessen ist für Mikrotiterplatten ein Einfallswinkel kleiner als 20° zweckmäßig. In einer bevorzugten Ausführungsform des optischen Gerätes 1 ist der Einfallswinkel α des Anregungslichts 9 kleiner als 20°, vorzugsweise kleiner als 10°, und besonders bevorzugt kleiner als 5°.

Es muss beachtet werden, dass der Einfallswinkel α andererseits auch hinsichtlich kleiner Werte beschränkt ist, weil die endliche Apertur sowohl der Anregungsoptik als auch der Abbildungsoptik größer als null ist.

In einer weiteren bevorzugten Ausführungsform des optischen Gerätes 1 gemäß der Erfindung ist der Einfallswinkel α

$$\alpha \geq \theta_1 + \theta_2$$

wobei $\theta_1$ der halbe Öffnungswinkel der Anregungsoptik und $\theta_2$ der halbe Öffnungswinkel der Abbildungsoptik ist.

Der halbe Öffnungswinkel $\theta$ sowohl der Anregungsoptik als auch der Abbildungsoptik ist durch die entsprechende numerische Apertur NA, festgelegt als $NA_i = n_i \cdot \sin \theta_i$, wobei $n_i$ der Brechungsindex des Mediums zwischen dem Objekt und der betreffenden Optik ist und wobei $i = 1$ für die Anregungsoptik und $i = 2$ für die Abbildungsoptik steht. Wenn der Einfallswinkel $\alpha$ kleiner wird als in der Gleichung oben festgelegt, trifft eine größer werdende Menge des reflektierten Lichts des Anregungslichtstrahls 9 den optischen Sensor 6. Diese Aussage ist für eine Anordnung funktionalisierter Stellen auf einem ebenen, festen Träger 4 und auch für eine Mikrotiterplatte zutreffend.

In einer weiteren bevorzugten Variante umfasst das optische Gerät 1 gemäß der Erfindung ferner ein Anregungsfiltersystem 12, das in der Lage ist, mindestens eine Anregungsfrequenz von der Lichtquelle 5 zu der Anordnung einer Vielzahl einzelner Detektionsorte 2 zu übertragen, während es eine Vielzahl anderer Frequenzen blockiert und/oder ein Abbildungsfiltersystem 13, das in der Lage ist, die Fluoreszenz-Signale von der Anordnung einer Vielzahl einzelner Detektionsorte 2 zum optischen Sensor 6 zu übertragen, während es Licht mit den Anregungsfrequenzen blockiert.

Wie zuvor angeführt, umfasst das optische Gerät 1 eine Anregungslinsenanordnung 10, die Licht von der Lichtquelle 5 zur Feldlinse 8 überträgt. Dies bedeutet, dass das Licht von der Lichtquelle 5 auf die Anordnung einer Vielzahl einzelner Detektionsorte 2 unter Benutzung einer Anregungsoptik, umfassend die Feldlinse 8 und eine Anregungslinsenanordnung 10, abgebildet wird. Die Anregungsoptik stellt ein telezentrisches Anregungslicht 9 auf der Objektseite der Feldlinse 8 bereit und ist daher eine telezentrische Anregungsoptik. Die Anregungslinsenanordnung 10 umfasst mindestens eine Linse, vorzugsweise mindestens drei Linsen, um die Apertur der Anregung hinsichtlich einer besseren Ausnutzung der Lichtquellenleistung zu vergrößern. Die Anregungslinsenanordnung 10 kann eine Asphäre umfassen, wenn die Anzahl der Linsen verringert werden soll. Vorzugsweise ist die telezentrische Anregungsoptik achromatisch konzipiert, um unabhängig von der Anregungswellenlänge eine gleichmäßige Intensitätsverteilung über die Anordnung einer Vielzahl einzelner Detektionsorte 2 zu realisieren.

Die Lichtquelle 5 kann eine Lichtquelle sein, die Licht mit einer Vielzahl von Frequenzen ausstrahlt, beispielsweise eine Weißlichtquelle, eine Gasentladungslampe, eine Xenonlampe, eine Quecksilberlampe, eine Glühlampe oder eine Wolframlampe. Die Lichtquelle 5 kann auch nur Licht einer einzigen Frequenz bzw. in einem schmalen Frequenzbereich ausstrahlen, beispielsweise ein Laser oder eine LED. Die Lichtquelle 5 kann auch eine Kombination von mehr als einem Leuchtmittel umfassen. Eventuell können zusätzlich Filter oder Filtersätze eingesetzt werden.

Die telezentrische Anregungsoptik kann, zusätzlich zu der Feldlinse 8, dem Anregungsfiltersystem 12 und der Anregungslinsenanordnung 10, mehrere zusätzliche Komponenten umfassen. In einer Ausführungsform umfasst die telezentrische Anregungsoptik zusätzlich einen Lichtleiter, um das Licht von der Lichtquelle zu den optischen Komponenten des optischen Systems zu übertragen. Unter Benutzung eines Lichtleiters ist es möglich, Licht von verschiedenen Lichtquellen 5 zu koppeln und dieses kombinierte Licht gleichzeitig zu den optischen Komponenten zu übertragen. Mit einem Spiegel oder Strahlteiler 14 oder einer Lichtumlenkeinheit kann die Richtung des Anregungslichts 9 und/oder der Fluoreszenz-Signale 7 geändert werden. Ferner kann ein Lichtmischer (z.B. ein Lichtmischstab) vorgesehen sein.

Das Licht von der Lichtquelle 5 wird unter Benutzung der telezentrischen Anregungsoptik, umfassend die Feldlinse 8 und eine Anregungslinsenanordnung 10, auf die Anordnung einer Vielzahl einzelner Detektionsorte 2 abgebildet. Daher wird in dieser Ausführungsform der Erfindung die Anregung der Vielzahl einzelner Detektionsorte mit einer Anregungsoptik durchgeführt, die vorzugsweise telezentrisch im Objektraum ist.

Das optische Gerät 1 der Figur 1 ist auch für das Abbilden von Chemilumineszenz- und Biolumineszenz-Signalen anpassbar. Da in diesen Fällen kein Anregungslicht 9 benötigt wird, können die Lichtquelle 5, die Anregungslinsenanordnung 10 und das Anregungsfiltersystem 12 weggelassen werden. Die weitere Ausgestaltung kann wie bei einem optischen Gerät 1 zum Abbilden von Fluoreszenz-Signalen 7 erfolgen.

Das optische Gerät 1 der Figur 1 umfasst eine Abbildungslinsenanordnung 11, die Licht von der Feldlinse 8 zum optischen Sensor 6 überträgt. Dies bedeutet, dass die Fluoreszenz-Signale 7, die an der Anordnung einer Vielzahl einzelner Detektionsorte 2 erzeugt werden, durch eine telezentrische Abbildungsoptik, umfassend die Feldlinse 8 und eine Abbildungslinsenanordnung 11, auf einen optischen Sensor 6 abgebildet werden. In anderen Ausführungsformen der Erfindung umfasst die telezentrische Abbildungsoptik ferner z.B. eine Lichtstrahlenfalteinheit und/oder besondere Abbildungsfiltersysteme 13.

Die telezentrische Abbildungsoptik sollte auf die Größe des optischen Sensors 6 und die räumlichen Ausmaße der Anordnung einer Vielzahl einzelner Detektionsorte 2 optimiert werden. Wie im Fall der Anregungslinsenanordnung 10 umfasst die Abbildungslinsenanordnung 11 mindestens eine Linse, vorzugsweise eine Anordnung von mindestens fünf Linsen. Für die Abbildungslinsenanordnung 11 ist eine große Anzahl von Linsen zweckmäßig, da für die Abbildungsoptik im Vergleich zur Anregungsoptik sogar noch höhere Anforderungen berücksichtigt werden müssen. Die Fluoreszenz-Abbildung muss für die korrekte Nachbildung der lateralen Verteilung von Detektionsorten 2 auf dem optischen Sensor 6 die richtige Skalierung aufweisen. Außerdem müssen Abbildungsfehler wie sphärische oder chromatische Aberration, Koma, Astigmatismus, spezielle Fehler oder Feldkrümmung berücksichtigt werden. Aufgrund der Abbildung der Fluoreszenz-Signale 7 auf den optischen Sensor 6 wird die Fluoreszenz-Abbildung vorzugsweise mit einer Abbildungsoptik durchgeführt, die nur auf der Objektseite der Feldlinse 8 telezentrisch ist. Die Abbildungslinsenanordnung 11 kann mit dem optischen Sensor 6 zu einer Abbildungseinheit 15 gekoppelt sein.

Im Falle von PCR-Amplifikationen, die in einzelnen Wells einer Mikrotiterplatte durchgeführt werden, sind alle Fluoreszenz-Einheiten als fluoreszierende Farbstoffe anwendbar, die sich spezifisch an doppelsträngige Nukleinsäuren binden. Im Kontext dieser Erfindung werden diese fluoreszierenden Farbstoffe als Fluoreszenz-DNA-Bindungseinheiten bezeichnet, wobei die Fluoreszenz-DNA-Bindungseinheit ein Molekül oder ein Molekülpaar ist, das ein charakteristisches Fluoreszenz-Licht liefert, wenn es an eine doppelsträngige DNA gebunden ist. Im Bereich der Echtzeit-PCR-Überwachung sind die folgenden Erfassungsformate bekannt: Format von DNA bindendem Farbstoff (z.B. SybrGreenI), TagMan-Probes, Molecular Beacons, Format von Einzelmarkersonden (SLP) oder FRET-Hybridisierungssonden.

Eine auch bevorzugte Ausführungsform des optischen Gerätes 1 gemäß der Erfindung ist ein optisches Gerät, wobei es sich bei den einzelnen Detektionsorten 2 der Anordnung um Stellen auf einem ebenen Träger 4 handelt und die fluoreszierenden Farbstoffe auf diesen Stellen aufgebracht sind. Ein Beispiel für diese bevorzugte Ausführungsform des optischen Gerätes 1 ist eine Vorrichtung zum gleichzeitigen Abbilden von Fluoreszenz-Signalen 7 von verschiedenen Stellen einer ebenen Anordnung. In einer spezifischen Ausführungsform ist solch eine Anordnung eine DNA-Anordnung, wo lateral beschränkte Bereiche mit DNA-Sonden, die verschiedene Sequenzen haben, funktionalisiert sind. In diesem Fall kann das optische Gerät 1 gemäß der Erfindung Hybridisierungsereignisse mit Proben, die Nukleinsäure enthalten, überwachen, wenn z.B. der komplementäre DNA-Strang mit einem Fluoreszenz-Farbstoff markiert wird. Alternativ zur Markierung der DNA-Moleküle in der Probe können die Hybridisierungsereignisse auch durch an doppelsträngige Nukleinsäuren bindende fluoreszierende Farbstoffe sichtbar gemacht werden.

Die telezentrische Anregungsoptik in dem Ausführungsbeispiel von Figur 1 arbeitet beispielsweise bei Frequenzen von 450 nm bis 650 nm und die telezentrische Abbildungsoptik bei Frequenzen von 500 nm bis 740 nm. In dem Ausführungsbeispiel ist die Lichtquelle 5 eine Xenonlampe und als optischer Sensor 6 dient ein gekühlter 2/3-Inch CCD-Chip mit 1024 x 1344 Bildpunkten. Das optische Gerät 1 ist zum Abbilden eines Bereichs von 83 mm x 117 mm derart konzipiert, dass Mikrotiterplatten mit 96 Wells (Abstand 9 mm, Durchmesser 5 mm) und 384 Wells (Abstand 4,5 mm, Durchmesser 3 mm) benutzt werden können. Die geeignete Wellenlänge zur Anregung und Abbildung für bestimmte Fluoreszenz-Farbstoffe wird durch Filterräder eingestellt.

Die telezentrische Anregungsoptik hat in dem Ausführungsbeispiel eine numerische Apertur von 0,35 auf der Seite der Lichtquelle 5 und von 0,014 auf der Seite der Mikrotiterplatte. Aus geometrischen Gründen wurde die Lichtquelle 5 senkrecht zum CCD-Chip angeordnet und der Anregungslichtstrahl 9 mit einem zusätzlichen Spiegel in Richtung der Mikrotiterplatte ausgerichtet. Der Anregungslichtstrahl 9 selbst hat einen Einfallswinkel zur Mikrotiterplatte von 2° und eine Intensitätsschwankung über das Objektfeld (88 mm x 122 mm) von weniger als 10%. Der "Anregungslichtstrahl 9" steht hier synonym für die "optische Achse der Beleuchtung", denn der Strahlengang umfasst ganz viele Strahlen, nicht nur einen. Die Abbildungsoptik hat auf der Objektseite auch eine Apertur von 0,014 und einen Abbildungsmaßstab von 0,075 mit einem Abstand von 800 mm zwischen Objekt und Bild. Dieser große Abstand kann mit zwei Faltspiegeln realisiert werden. Die Abbildungsoptik hat eine Tiefenschärfe von ±3 mm.

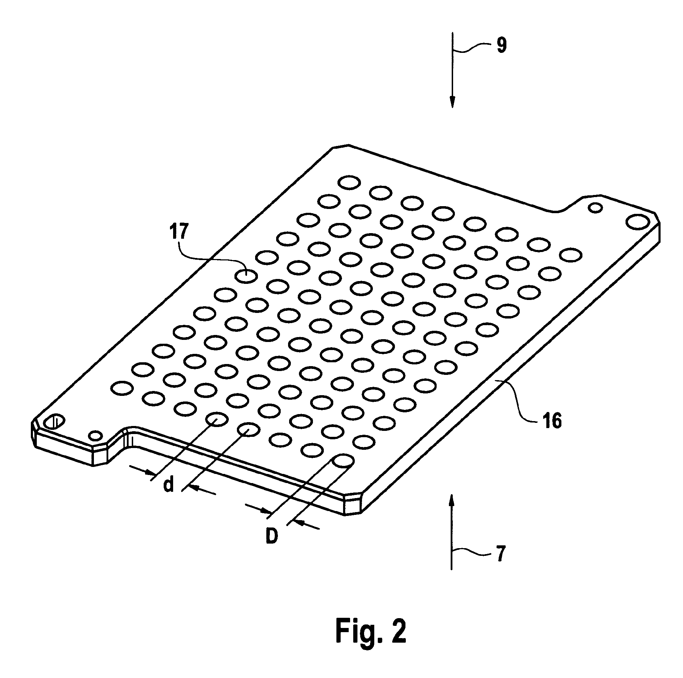

Ein insoweit bekanntes Gerät 1 gemäß Figur 1 nutzt sowohl den Strahlungsfluss der Lichtquelle 5 nur sehr ineffizient zur Fluoreszenzanregung der Detektionsorte 2 aus, da im Wesentlichen die Fläche um die Detektionsorte 2, beispielsweise der massive Teil des Heizdeckels einer Mikrotiterplatte beleuchtet wird. Nur das Licht, das auf die Detektionsorte 2 fällt, beispielsweise durch die hierfür im Heizdeckel einer Mikrotiterplatte vorgesehenen Löcher, steht tatsächlich zur Fluoreszenzanregung zur Verfügung. Dies wird anhand von Figur 2 veranschaulicht.

Die Figur 2 zeigt einen solchen Heizdeckel 16, der sich an der Oberseite der Wells einer Mikrotiterplatte befindet. Er ist in der Regel undurchsichtig und hat für jedes Well ein Loch 17, durch das die Lösung in dem Well mit Anregungslicht 9 beleuchtet wird und durch das die aus der Lösung emittierten Fluoreszenz-Signale 7 detektiert werden.

Der Lochabstand d im Heizdeckel 16 beträgt beispielsweise gemäß dem SBS Mikrotiter-Standardformat 9 mm. Der Lochdurchmesser D ist mit 5,2 mm ein wenig kleiner als der Durchmesser des zylindrischen Teils der Wells von 5,5 mm und deutlich kleiner als der Lochabstand d. Aus Lochabstand d und Lochdurchmesser D kann der Lichtverlust durch Abschattung durch die undurchlässigen Teile des Heizdeckels 16 wie folgt berechnet werden.

Die Fläche $A_L$ eines Loches 17 beträgt:

$$A_L = \left(\frac{D}{2}\right)^2 \cdot \pi = 21,24 \text{ mm}^2$$

Jedem Loch 17 im Heizdeckel 16 lässt sich ein Quadrat zuordnen, dessen Kantenlänge gerade der Lochabstand d ist und wobei benachbarte Quadrate jeweils ohne Zwischenabstand aneinander grenzen. Die Fläche $A_Q$ dieses Quadrates ist:

$$A_Q = d^2 = 81 \text{ mm}^2$$

Der Anteil $\eta_A$ des zum Beleuchten der genutzten Anregungslichtes 9 ist das Verhältnis von $A_L$ zu $A_Q$:

$$\eta_A = \frac{A_L}{A_Q} = 26,2\%$$

Der Wert von $\eta_A$ ist also durch rein geometrische Größenverhältnisse gegeben und kann als "Füllfaktor" interpretiert werden. Dieser Füllfaktor und damit die Effizienz der Fluoreszenzanregung der Detektionsorte 2 werden durch die erfindungsgemäße Arrayoptikanordnung verbessert.

Neben der Effizienz der Fluoreszenzanregung wird durch die Erfindung auch die Effizienz der Fluoreszenzdetektion verbessert, da ein optisches Gerät 1 nach dem Stand der Technik auch den Strahlungsfluss der Fluoreszenz-Signale 7 zu dem optischen Sensor 6 nur ineffizient ausnutzt. Das von den Farbstoffmolekülen am Detektionsort 2 emittierte Fluoreszenzlicht wird nämlich räumlich isotrop abgestrahlt. Nur ein kleiner Teil dieses Lichtes wird von der Detektionsoptik erfasst und auf den Detektor 6 gelenkt. Die numerische Apertur einer Detektionsoptik von Figur 1 ist winzig und beträgt typischerweise NA = 0,014. Der Zusammenhang zwischen der numerischen Apertur NA der Detektionsoptik und dem von dieser erfassten Raumwinkel $\Omega_D$ lautet:

$$\Omega_D = 2\pi \cdot \left(1 - \sqrt{1 - NA^2}\right) = 6,2 \cdot 10^{-4}$$

Der volle Raumwinkel $\Omega_{tot}$, der von der Fluoreszenzstrahlung ausgeleuchtet wird, beträgt $4\pi$. Somit beträgt der Anteil $\eta_D$ des für die Messung mit dem optischen Sensor 6 genutzten Fluoreszenzlichtes nur ca. 0,005%:

$$\eta_D = \frac{\Omega_D}{\Omega_{tot}} = 0,5 \cdot \left(1 - \sqrt{1 - NA^2}\right) = 4,9 \cdot 10^{-5}$$

Die Erfindung verbessert sowohl die Effizienz der Fluoreszenzanregung als auch die Effizienz der Fluoreszenzdetektion. Dies gelingt, indem zwischen die Feldlinse 8 und den Heizdeckel 16 bzw. die Anordnung einer Vielzahl von Detektionsorten 2 eine Arrayoptikanordnung 18 gesetzt wird.

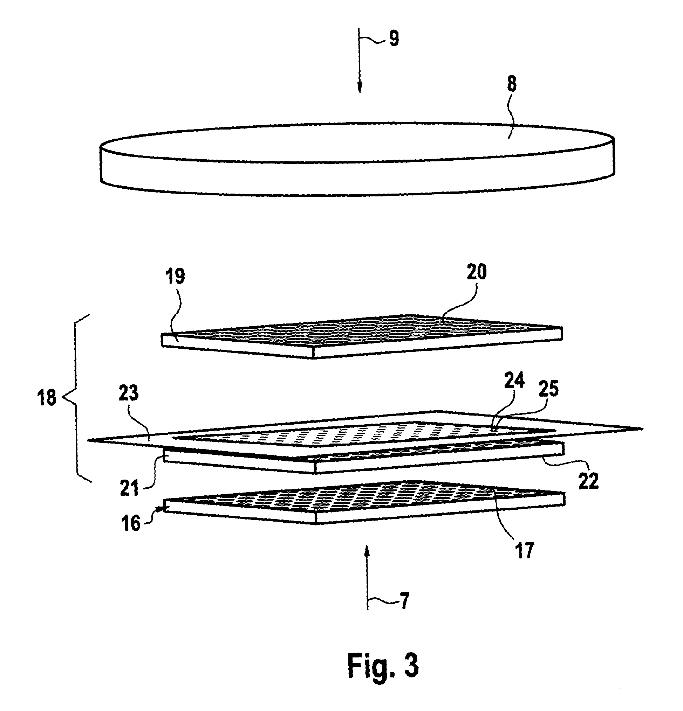

Die Komponenten und die Lage der Arrayoptikanordnung 18 sind in Figur 3 veranschaulicht. Die Arrayoptikanordnung 18 umfasst ein Feldlinsenarray 19 mit Feldlinsen-Arrayelementen 20 und ein Pupillenlinsenarray 21 mit Pupillenlinsen-Arrayelementen 22 und ist im Strahlengang zwischen der Feldlinse 8 und der Anordnung einer Vielzahl einzelner Detektionsorte 2 angeordnet. Die Arrayoptikanordnung 18 könnte somit auch als Arrayobjektiv bezeichnet werden. Das Feldlinsenarray 19 ist der Feldlinse 8 und das Pupillenlinsenarray 21 ist der Vielzahl der Detektionsorte 2 zugewandt. Dabei ist das Feldlinsenarray 19 parallel zu dem Pupillenlinsenarray 21 angeordnet. In dem Ausführungsbeispiel hat das optische Gerät 1 somit eine der Anzahl der Wells der Mikrotiterplatte entsprechende Anzahl optischer Kanäle, wobei jeder optischer Kanal ein zugehöriges Feldlinsen-Arrayelement 20 und ein zugehöriges Pupillenlinsen-Arrayelement 22 umfasst.

Die Objektebene ist wie bei dem optischen Gerät 1 nach dem Stand der Technik bevorzugt die den Wells zugewandte Unterseite des Heizdeckels 16. Diese Objektebene bildet eine Feldebene, wobei die hierzu konjugierte Feldebene in dem Feldlinsen-Arrayelement 20 liegt, nämlich auf der Fläche des Feldlinsen-Arrayelements 20, die dem Pupillenlinsen-Arrayelement 22 abgewandt ist. Die Feldebenen der Feldlinse 8 bzw. des Feldlinsen-Arrayelements 20 und des Heizdeckels 16 bleiben auch mit der erfindungsgemäßen Arrayoptikanordnung 18 zueinander konjugiert. Genauer ausgedrückt hat nicht die Feldlinse 8 alleine eine Feldebene, sondern die Detektionsoptik (Abbildungslinsenanordnung 11) zusammen mit der Feldlinse 8. Beide zusammen nämlich bilden die Oberseite des Feldlinsenarrays 19 auf den optischen Sensor 6 ab, nicht die Feldlinse 8 allein. Entsprechendes gilt für den Beleuchtungszweig.

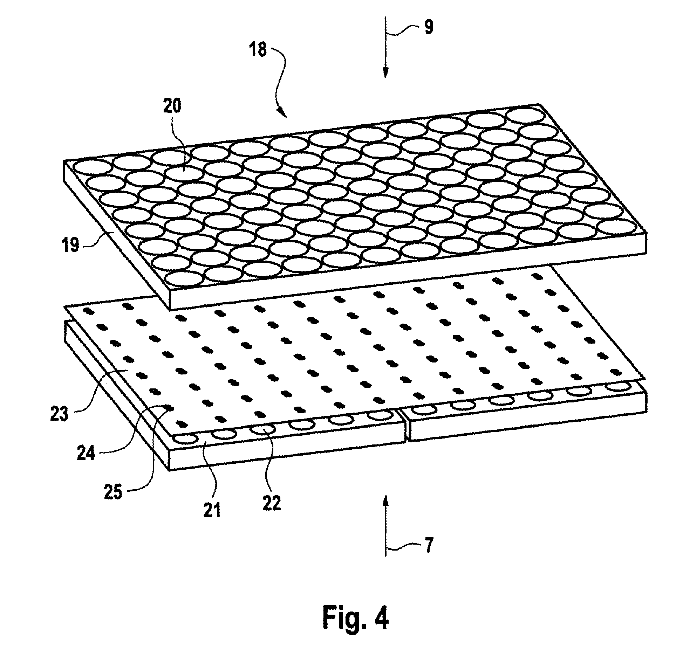

Die Figur 4 zeigt eine erfindungsgemäße Arrayoptikanordnung 18 bestehend aus Feldlinsenarray 19 und Pupillenlinsenarray 21, wobei in einer bevorzugten Ausführungsform noch zwischen Feldlinsenarray 19 und Pupillenlinsenarray 21 ein Blendenarray 23 angeordnet ist. Jeweils jedem Well der Mikrotiterplatte bzw. jedem Loch 17 im Heizdeckel 16 wird ein zweilinsiges Objektiv, umfassend ein Feldlinsen-Arrayelement 20 und ein Pupillenlinsen-Arrayelement 22 zugeordnet. Die Objektive sind untereinander gleich. In der Feldarrayoptikanordung 18 ist also jeweils ein aus einem Feldlinsen-Arrayelement 20 und einem Pupillenlinsen-Arrayelement 22 gebildetes Linsenpaar jeweils einem der Detektionsorte 2 zugeordnet.

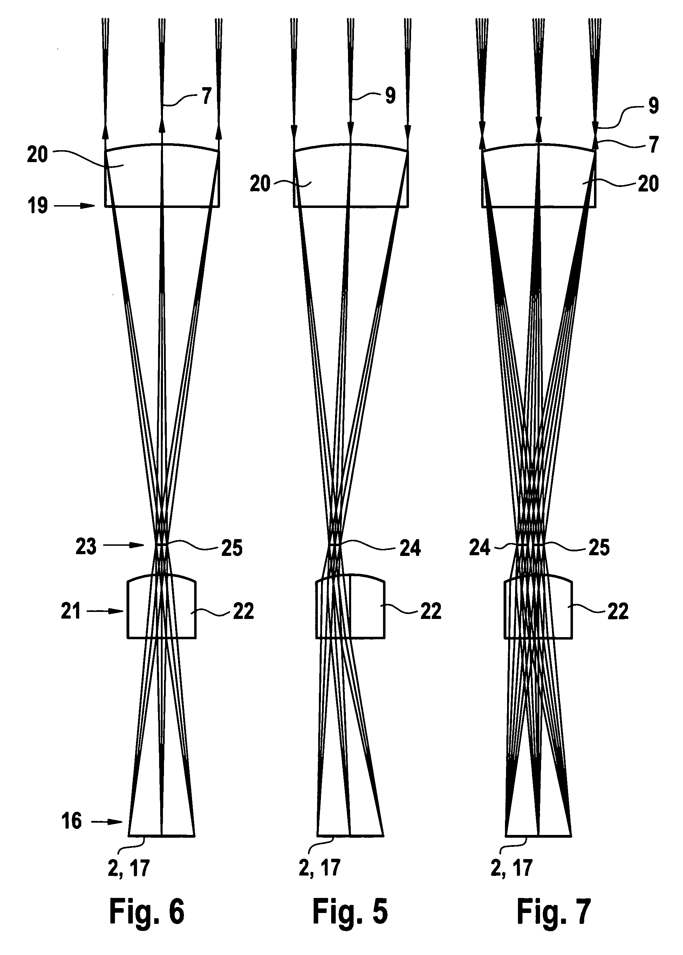

Die Mikrotiterplatte und der Heizdeckel 16 werden gegenüber dem Stand der Technik wegen der dazwischen platzierten Arrayoptikanordnung 18 von ihrer ursprünglichen Position relativ zu der Feldlinse 8 entfernt (um ca. 60 mm versetzt) und in der Bildebene (bezogen auf die Beleuchtung mit dem Anregungslicht 9) der 96 Objektive der Arrayoptikanordnung 18 platziert. Als Objektebene (bezogen auf die Detektion der Fluoreszenz-Signale 7) der 96 Objektive der Arrayoptikanordnung 18 wird vorzugsweise wie im Stand der Technik die ursprüngliche Position der Unterseite des Heizdeckels 16 gewählt. Diese Objektive der Arrayoptikanordnung 18 verbessern einerseits den Füllfaktor der Beleuchtung, andererseits vergrößern sie die numerische Apertur der Detektion. Dies wird im Folgenden anhand der Figuren 5 bis 8 erläutert.

Die Figuren 5 und 6 zeigen jeweils einen einzelnen Kanal der 96 kanaligen Arrayoptikanordnung 18 bestehend aus einem Feldlinsen-Arrayelement 20, einem Pupillenlinsen-Arrayelement 22 und einer Blende des Blendenarrays 23, die sich zwischen beiden Linsen in der Nähe des Pupillenlinsen-Arrayelements 22 befindet. In Figur 5 ist der Strahlengang für die Fluoreszenzanregung mit dem Anregungslicht 9 eingezeichnet, in Figur 6 ist der Strahlengang für die Fluoreszenzdetektion der Fluoreszenz-Signale 7 dargestellt. Jeweils ein Pupillenlinsen-Arrayelement 22 des Pupillenlinsenarrays 21 bildet ein Feldlinsen-Arrayelement 20 des Feldlinsenarrays 19 (bzw. den Rand eines Feldlinsen-Arrayelements 20) auf einen der Detektionsorte 2 (d.h. auf den unteren Rand eines Loches 17 im Heizdeckel 16) ab, die sich in den Figuren am unteren Ende befinden und dort eine Feldebene bilden. Das jeweils zugehörige Loch 17 in dem Heizdeckel 16, das in den Figuren 5 und 6 nicht dargestellt ist, erstreckt sich von der Feldebene an den Detektionsorten 2 nach oben in Richtung zu dem Pupillenlinsen-Arrayelement 22.

Oberhalb der Feldlinsen-Arrayelemente 20, d.h. auf der Eintrittsseite der Feldlinsen-Arrayelemente 20 bezogen auf das Anregungslicht 9 und auf der Austrittsseite der Feldlinsen-Arrayelemente 20 bezogen auf die Fluoreszenz-Signale 7 befindet sich die nicht dargestellte Feldlinse 8. Dort, also oberhalb der Feldlinsen-Arrayelemente 20, verlaufen die Hauptstrahlen parallel und die Achsen der Strahlbüschel sind parallel, d.h. die Anordnung ist in diesem Bereich telezentrisch. Die Feldlinsen-Arrayelemente 20 des Feldlinsenarrays 19 erzeugen Beleuchtungspupillen für das Anregungslicht 9 und Detektionspupillen für die Fluoreszenz-Signale 7. Die Arrayoptikanordnung 18 bildet sowohl Felder (Objekte, Bilder) als auch Blenden (Pupillen) ab. Bei der Auslegung eines zusammengesetzten optischen Systems sollte man sowohl der Abbildung der Felder als auch die Abbildung der Pupillen berücksichtigen.

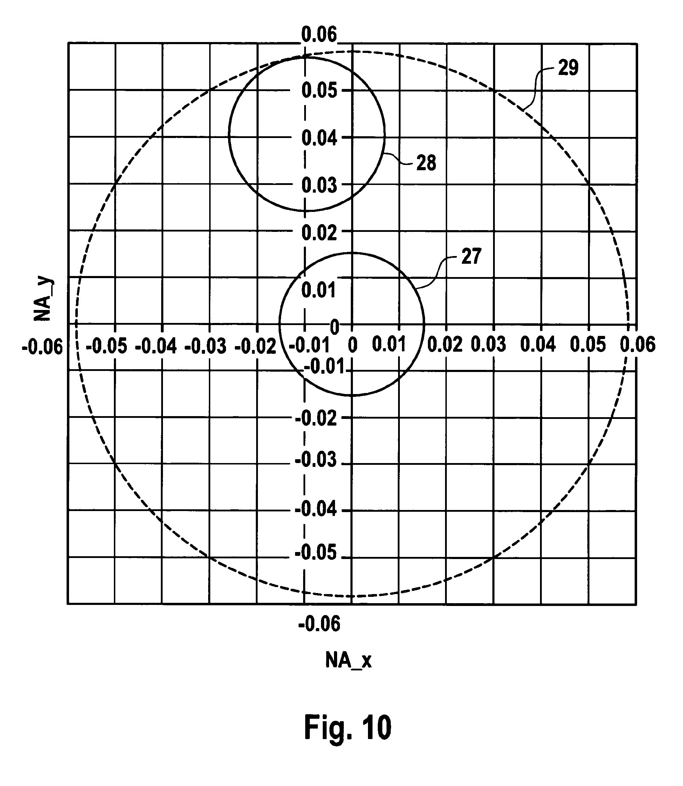

Eingangsseitig (oben in Figur 6) sind die Achsen der Strahlenbüschel für die Fluoreszenzdetektion untereinander parallel und auch parallel zur optischen Achse. Die Strahlenbüschel für die Fluoreszenzanregung sind eingangsseitig (oben in Figur 5) ebenfalls untereinander parallel, aber im Gegensatz zur Fluoreszenzdetektion gegenüber der optischen Achse leicht gekippt. Die Verkippung ist so gewählt, dass sich die Strahlenbüschel für die Fluoreszenzanregung und die Fluoreszenzdetektion auf der Feldebene (Objektebene, an den Detektionsorten 2) nicht durchdringen (siehe auch Figur 10), um eine Trennung zwischen Anregungslicht 9 und Fluoreszenz-Signalen 7 zu erzielen.

Selbstverständlich ist es auch möglich, eine umgekehrte Anordnung zu treffen, so dass die Fluoreszenzanregung gegenüber der optischen Achse nicht gekippt ist und die Fluoreszenzdetektion unter einem Winkel zur optischen Achse erfolgt, oder es kann sowohl die Fluoreszenzanregung als auch die Fluoreszenzdetektion unter einem verschiedenen Winkel zur optischen Achse durchgeführt werden. Die eingangsseitigen Strahlrichtungen für die Fluoreszenzanregung und die Fluoreszenzdetektion sind von der Optik des Gerätes 1 vorgegeben. Sie entstehen durch die lateral getrennten Blenden des Beleuchtungsstrahlenganges und des Detektionsstrahlenganges im optischen Gerät 1. In der Regel ist es vorteilhafter, die Hauptstrahlen der Detektion parallel zur optischen Achse zu wählen. Ein Symmetriebruch führt in der Regel zu einer Verschlechterung der Abbildungsleistung. Eine gute Abbildungsleistung wird in der Praxis mehr zur Detektion als zur Beleuchtung benötigt.

Die Figur 7 zeigt in einer Kombination der Figuren 5 und 6 einen Schnitt durch einen Kanal einer erfindungsgemäßer Arrayoptikanordnung 18 mit einer Blende des Blendenarrays 23 mit zwei getrennten Blendenöffnungen 24, 25, eine für die Fluoreszenzanregung mit dem Anregungslicht 9 und eine für die Fluoreszenzdetektion der Fluoreszenz-Signale 7. Die Strahlengänge für die Fluoreszenzanregung und für die Fluoreszenzdetektion sind gemeinsam dargestellt. Die Blende 23 zwischen Feldlinsen-Arrayelement 20 und Pupillenlinsen-Arrayelement 22 hat in diesem Ausführungsbeispiel zwei getrennte Blendenöffnungen 24, 25 je Kanal. Man kann aber auch nur eine Blendenöffnung je Kanal vorsehen, siehe oben. Die außer-axiale Blendenöffnung 24 (links) lässt das Anregungslicht 9 Licht für Fluoreszenzanregung passieren. Die axiale Blendenöffnung 25 (rechts) lässt die Fluoreszenz-Signale 7 zur Fluoreszenzdetektion passieren. Auch die Blendenöffnung 24 lässt Detektionslicht passieren, da die Fluoreszenzquelle isotrop strahlt. Dieses Licht wird jedoch spätestens an der Blende der Detektionsoptik absorbiert. Die Detektionsorte 2, d.h. die Löcher 17 im Heizdeckel 16, werden von den Pupillenlinsen-Arrayelementen 22 formatfüllend (d.h. form- und größentreu) auf die Oberseite der Feldlinsen-Arrayelemente 20 abgebildet. Somit sind diese Oberseiten und die Löcher 17 in dem Heizdeckel optisch konjugiert.

Für den Abbildungsmaßstab β der 96 Objektive wird vorzugsweise das Verhältnis von Lochabstand d zu Lochdurchmesser D des Heizdeckels 16 gewählt:

$$\beta = \frac{d}{D} = 1,73$$

Allgemein ist es vorteilhaft, wenn die Vielzahl der Detektionsorte 2 einen Durchmesser D aufweisen und in einem Abstand d zueinander angeordnet sind, wobei der Abbildungsmaßstab β der Pupillenlinsen-Arrayelemente 22 gleich dem Verhältnis von Abstand d zu Durchmesser D ist. Somit erzeugt jedes einzelne zweilinsige Objektiv der Arrayoptikanordnung 18 ein Bild des zugehörigen Loches 17 des Heizdeckels 16 mit der Größe D dieses Bildes. Aus Sicht der Beleuchtungsoptik erscheinen dann die Löcher 17 im Heizdeckel 16 um den Abbildungsmaßstab β vergrößert und die Zwischenräume zwischen den Bildern der Löcher 17 soweit zusammengeschrumpft, dass diese sich gerade tangential berühren.

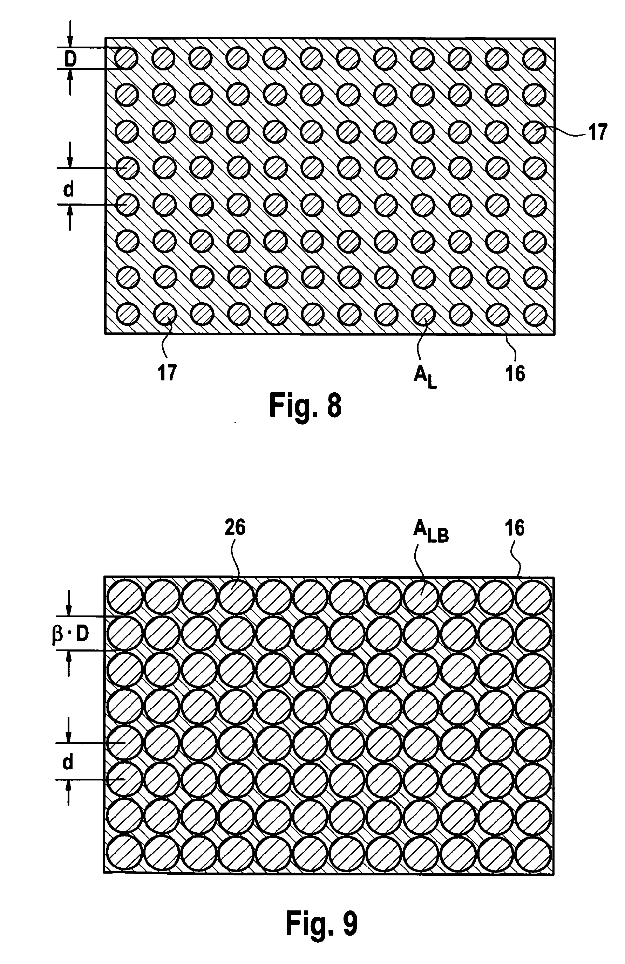

Die Figur 8 zeigt eine Aufsicht auf den Heizdeckel 16 von Figur 2 als Objekt für die Abbildung durch die Arrayoptikanordnung 18, die Figur 9 das Bild des Heizdeckels 17 von Figur 2 nach der Abbildung durch die Arrayoptikanordnung 18. Die Tatsache, dass nur die Löcher 17 vergrößert erscheinen, aber nicht gleichzeitig auch die Abstände zwischen ihnen, ist darauf zurückzuführen, dass es sich hier nicht um eine skalierende Abbildung mit einem Objektiv, sondern um eine Abbildung mit einer Arrayoptik handelt. Die Arrayoptik der Arrayoptikanordnung 18 erzeugt also nur ein vergrößertes Bild der Löcher 17, ohne deren Abstand d untereinander zu verändern. Die Fläche $A_{LB}$ eines Lochbildes 26 in Figur 9 beträgt aufgrund der um den Abbildungsmaßstab β vergrößerten Abbildung:

$$A_{LB} = \left(\frac{d}{2}\right)^2 \cdot \pi = 63,62 \text{ mm}^2 = \beta^2 \cdot A_L$$

Der Anteil $\eta'_A$ des genutzten Anregungslichtes 9 ist das Verhältnis von $A_{LB}$ zu $A_Q$:

$$\eta'_A = \frac{A_{LB}}{A_Q} = 78,5\%$$

Der Gewinnfaktor $g_A$ der Arrayoptikanordnung 18 für die Fluoreszenzanregung ist das Verhältnis von $\eta'_A$ zu $\eta_A$:

$$g_A = \frac{\eta'_A}{\eta_A} = \frac{A_{LB}}{A_L} = \beta^2 = 3,0$$

Der Gewinnfaktor $g_D$ der Arrayoptikanordnung 18 für die Fluoreszenzdetektion ergibt sich durch folgende Betrachtung. Die numerische Apertur NA in der Objektebene der Detektionsoptik des optischen Gerätes 1 ist 0,014. Diese Ebene wird in 96 getrennten Kanälen von der Arrayoptikanordnung 18 auf die Unterseite des Heizdeckels 16 abgebildet. In dieser Richtung wirkt die Arrayoptikanordnung 18 verkleinernd. Entsprechend ist die numerische Apertur NA' auf der Unterseite des Heizdeckels 16 um den Abbildungsmaßstab β größer als in der Objektebene der Detektionsoptik des optischen Gerätes 1:

$$NA' = \beta \cdot NA$$

Der mit Hilfe der Arrayoptikanordnung 18 von der Detektionsoptik erfasste Raumwinkel $\Omega'_D$ lautet:

$$\Omega_D^{'} = 2\pi \cdot \left(1 - \sqrt{1 - NA'^2}\right) = 1,8 \cdot 10^{-3}$$

Der Anteil $\eta_D'$ des mit der Arrayoptikanordnung 18 genutzten Fluoreszenzlichtes beträgt somit:

$$\eta_D^{'} = \Omega_D^{'} \Big/ \Omega_{tot} = 1,5 \cdot 10^{-4}$$

Der Gewinnfaktor $g_D$ der Arrayoptikanordnung 18 für die Fluoreszenzdetektion ist das Verhältnis von $\eta_D'$ zu $\eta_D$:

$$g_D = \eta_D^{'} \Big/ \eta_D = 3,0$$

Der gesamte Gewinnfaktor $g_{tot}$ der Arrayoptikanordnung 18 ist das Produkt der Gewinnfaktoren für die Fluoreszenzanregung $g_A$ und die Fluoreszenzdetektion $g_D$:

$$g_{tot} = g_A \cdot g_D = 9,0$$

Eine einfache Umformung ergibt, dass der Gewinnfaktor $g_{tot}$ der Arrayoptikanordnung 18 auch als

$$g_{tot} = \left(d \Big/ D\right)^4 = \left(9,0 \Big/ 5,2\right)^4 = 9,0$$

geschrieben werden kann. Er hängt also nur von geometrischen Größen, nämlich vom Lochdurchmesser D und vom Lochabstand d des Heizdeckels 16 ab.

Die Arrayoptikanordnung 18 erhöht in Bezug auf Beleuchtung der Wells mit dem Anregungslicht 9 den Füllfaktor (Packungsdichte), im vorliegenden Beispiel um den Faktor 3. Ferner erhöht die Arrayoptikanordnung 18 in Bezug auf die Detektion der Fluoreszenz-Signale 7 die numerische Apertur, im vorliegenden Beispiel um den Faktor √3. Der Gewinn ist aber näherungsweise proportional zum Quadrat der numerischen Apertur. So ergibt sich dann der Gewinn um den Faktor 3 bei der Detektion. Beides zusammen ergibt einen Signalgewinn der Fluoreszenzmessung mit dem optischen Gerät 1, im vorliegenden Beispiel um den Faktor 9.

Bei der Berechnung des Gewinnfaktors $g_{tot}$ wurde implizit davon ausgegangen, dass die Abbildung der Arrayoptikanordnung 18 vignettierungsfrei erfolgt. Vignettierungsfreiheit bedeutet hier, dass alle Strahlen der Beleuchtungs- und Detektionsoptik des optischen Gerätes 1 die Arrayoptikanordnung 18 ohne Abschattung von Nutzlicht im Strahlengang passieren müssen. Dies gilt natürlich nicht für sonstiges Licht (Streulicht, Störlicht), das durch den Heizdeckel 16 oder das Blendenarray 23 abgeschattet wird.

Die Figur 10 zeigt die Strahlrichtungen der Beleuchtungs- und Detektionsoptik des optischen Gerätes 1 im Sinus-Raster. Das Sinus-Raster ermöglicht eine direkte Interpretation der Strahlrichtungen als numerische Apertur. Dargestellt sind die Strahlrichtungen am Ort des Feldlinsenarrays 19. Am Ort des Heizdeckels 16 (bzw. der Detektionsorte 2) sehen diese Strahlrichtungen wieder anders aus. Insbesondere sind diese dann feldabhängig (oder auch: ortsabhängig). Da die Beleuchtungs- und Detektionsoptik des optischen Gerätes 1 telezentrisch ist, sind die in Figur 10 gezeigten Stahlrichtungen im Rahmen der Aberrationen feldunabhängig. Für einen Kanal der Arrayoptikanordnung 18 liegen alle Strahlrichtungen des Detektionssystems für die Fluoreszenz-Signale 7 innerhalb der axialen Kurve 27 (Figur 6) und alle Strahlrichtungen des Beleuchtungssystems für das Anregungslicht 9 innerhalb der außeraxialen Kurve 28 (Figur 5). Die Kurven 27, 28 selbst sind durch den Blendenrand gegeben. Die gestrichelte Kurve stellt die um die optische Achse zentrierte Einhüllende 29 für alle Strahlen aller Kanäle der gesamten Arrayoptikanordnung 18 dar. Die zugehörige numerische Apertur der Einhüllenden 29 beträgt 0,059.

Die von den beiden Kurven 27, 28 umschlossenen Bereiche berühren oder überlappen sich nicht, sondern weisen einen Abstand zueinander auf. Aufgrund dieser Tatsache gelingt es, das Anregungslicht 9 von den Fluoreszenz-Signalen 7 zu trennen. Dies ist beim Stand der Technik gemäß der WO 99/60381 nicht der Fall, da sich dort die Bereiche der beiden entsprechenden Kurven 27, 28 vollständig überlappen.

Die Arrayoptikanordnung 18 arbeitet vignettierungsfrei, wenn ihre eingangsseitige numerische Apertur größer als die numerische Apertur der Einhüllenden 29 (hier 0,059) ist und gleichzeitig die eingangsseitige Pupillenlage telezentrisch ist. Die eingangsseitige Telezentrie der Arrayoptikanordnung 18 erreicht man, indem man eine Blende (Blenden 24, 25 bzw. Blendenarray 23) in der rückwärtigen Brennebene der Frontlinse (Feldlinsen-Arrayelement 20) der Arrayoptikanordnung 18 platziert. Der Zusammenhang zwischen der numerischen Apertur NA eines Strahles, der Strahlhöhe h (Abstand von der optischen Achse, gemessen an dem Durchstoßpunkt in einer Ebene senkrecht zur optischen Achse) in der Blendenebene und der Brennweite f der Frontlinse (Feldlinsen-Arrayelement 20) lautet:

$$f = h / NA$$

Die maximale Strahlhöhe h in der Blendenebene sollte dabei kleiner als der halbe Lochabstand d/2 sein, um eine räumliche Durchdringung benachbarter Kanäle der Arrayoptikanordnung 18 zu vermeiden:

$$h < d/2$$

Entsprechend sollte für die Brennweite der Frontlinse (Feldlinsen-Arrayelement 20) gefordert werden:

$$f < \frac{d}{(2 \cdot NA)} = 76,3 \text{ mm}$$

In manchen Ausführungsformen kann es zweckmäßig sein, wenn die Brennweite der Feldlinsen-Arrayelemente 20 so klein ist, dass sich die Blendenbilder der ersten und zweiten Blendenöffnungen 24, 25 für einen Detektionsort 2 nicht überlappen, um eine Trennung von Anregungslicht 9 und Fluoreszenz-Signalen 7 zu ermöglichen. Ferner kann es in manchen Ausführungsformen zweckmäßig sein, wenn die Brennweite der Feldlinsen-Arrayelemente 20 so klein ist, dass sich die Blendenbilder benachbarter Kanäle (benachbarter Detektionsorte 2) nicht überlappen, um eine Unterdrückung von Störlicht zu ermöglichen. Aufgrund der Periodizität der Arrayoptikanordnung 18 können eingangsseitig rechte Randbüschel und linke Randbüschel zusammenfallen.

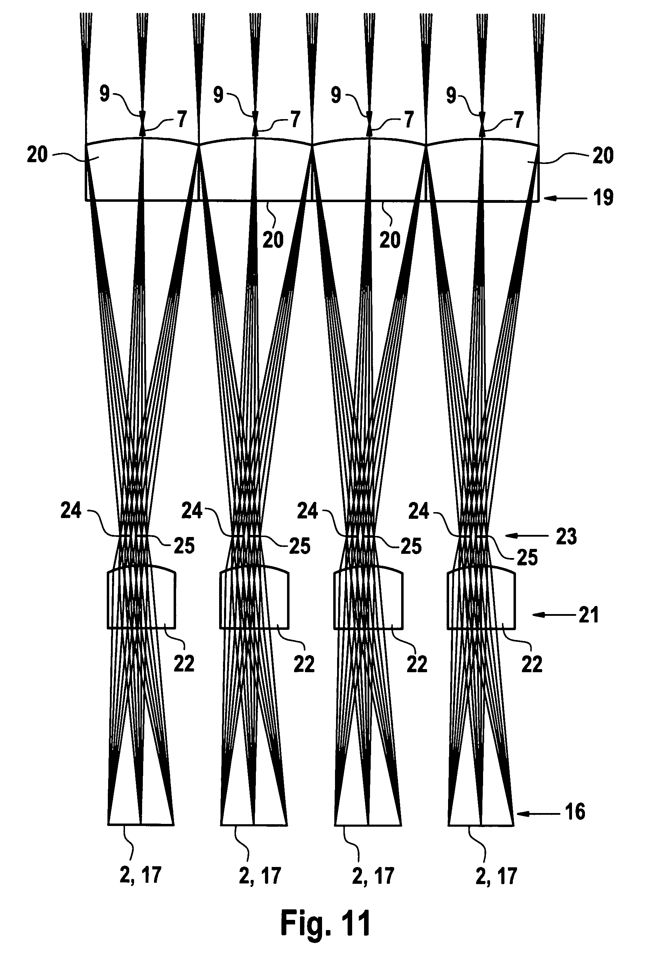

In Figur 11 ist zu erkennen, wie die Frontlinsen (Feldlinsen-Arrayelemente 20) die direkt benachbarten rechten Randbüschel und linken Randbüschel trennen und die Strahlen räumlich getrennt in Richtung der jeweiligen Blende lenken. Da diese Frontlinsen (Feldlinsen-Arrayelemente 20) direkt in der Feldebene der Beleuchtungs- und Detektionsoptik des optischen Gerätes 1 sitzen bezeichnet man diese ganz allgemein als Feldlinsen und hier als Feldlinsen-Arrayelemente 20. Mit anderen Worten werden feldnahe Linsen (d.h. nahe am Feld, also nahe an Objekt oder Bild stehend) als Feldlinsen und pupillennahe Linsen als Pupillenlinsen bezeichnet. Eine Feldebene ist eine Ebene, die beleuchtet oder abgebildet wird, d.h. ein Objekt, ein Bild oder ein Zwischenbild. Pupillen sind Blenden oder Bilder von Blenden. Feldlinsen bilden Pupillen und Pupilllenlinsen bilden Felder ab. Das Feldlinsenarray 19 ist feldnah, das Pupillenlinsenarray 21 und das Blendenarray 23 sind pupillennah.

Die Feldlinsen-Arrayelemente 20 liefern aufgrund ihrer feldnahen Lage und ihrer vergleichsweise großen Brennweite keinen signifikanten Beitrag zur Gesamtbrechkraft der Arrayoptikanordnung 18, d.h. sie ändern die Bildlage und Bildgröße nicht oder nur unwesentlich. Ihre zentrale Funktion besteht vielmehr in der örtlichen Trennung der optischen Kanäle, d.h. sie bilden Pupillen für den Strahlengang, durch die die Pupillenlage eingestellt und die Winkel der Strahlen begrenzt werden. Die Feldlinsen-Arrayelemente 20 sorgen vorzugsweise für eine austrittsseitig (am Betrachtungsort, auf der Seite der Detektionsorte 2) telezentrische Optik(in Figur 11 oben telezentrisch, unten nicht telezentrisch, wie oben erläutert), d.h. das Bild der Blenden liegt im unendlichen. Eine Pupille ist ein Bild einer Aperturblende. In einem optischen System gibt es Eintrittspupillen und Austrittspupillen. Wenn deren Bilder im unendlichen liegen, nennt man die Optik eingangsseitig bzw. austrittsseitig telezentrisch. Jedes Feldlinsen-Arrayelement 20 erzeugt in seiner Brennebene ein außeraxiales Bild der Blende der Beleuchtungssystems und ein axiales Bild der Blende der Detektionssystems.

Diese Bilder sind kanalweise getrennt.

Praktisch die gesamte Brechkraft eines Linsenpaares der Arrayoptikanordnung 18 ist in der jeweils hinteren Linse (Pupillenlinsen-Arrayelement 22) konzentriert. Da diese in der Nähe der Pupille lokalisiert sind, bezeichnet man sie ganz allgemein auch als Pupillenlinsen bzw. hier als Pupillenlinsen-Arrayelement 22. Die Pupillenlinsen-Arrayelemente 22 bilden die Ränder der Feldlinsen-Arrayelemente 20 formtreu auf die unteren Ränder der Löcher 17 des Heizdeckels 16 ab. Die Bohrungen 17 im Heizdeckel 16 wirken somit als ein Array von Feldblenden.

In der hinteren Brennebene der Feldlinsen-Arrayelemente 20 ist jeweils ein Blenden-Arrayelement (Blendenöffnung, Blende) platziert, wobei die Blenden-Arrayelemente die Bilder der Blende des Beleuchtungssystems und die Bilder der Blende des Detektionssystems maskieren. Die Gesamtheit dieser Blenden-Arrayelemente formt ein Blendenarray 23. "Maskieren" in diesem Sinne bedeutet, dass das Blendenarray 23 eine Maske bzw. Schablone bildet, wobei jedes Blenden-Arrayelement eine oder mehrere Blendenöffnungen aufweist, jeweils einem Feldlinsen-Arrayelement 20 und einem Pupillenlinsen-Arrayelement 23 zugeordnet ist und eine Maske für den Strahlengang durch das jeweilige Feldlinsen-Arrayelement 20 und Pupillenlinsen-Arrayelement 23 (d.h. für jeden "Kanal" der Arrayoptikanordnung 18) bildet. Diese Maskierung ist in dem Ausführungsbeispiel der Figuren 2 bis 12 formtreu, d.h. die Formen der beiden Öffnungen der Blenden-Arrayelemente entsprechen den Formen der Bilder der Blenden der Anregungslinsenanordnung 10 und der Abbildungslinsenanordnung 11. In anderen Ausführungsformen kann auch die Form der Blenden-Arrayelemente der Form der Feldlinsen-Arrayelemente 20 und/oder der Pupillenlinsen-Arrayelemente 23 und/oder der Detektionsorte 2 (Löcher 17 im Heizdeckel 16) entsprechen.

In anderen Ausführungsbeispielen kann die Maskierung, auch zusätzlich, größentreu sein. Dabei entspricht beispielsweise die Größe der Blenden-Arrayelemente der Größe der Beleuchtungspupillen des Anregungslichts 9 und/oder der Detektionspupillen der Fluoreszenz-Signale 7 und/oder der Pupillen der Detektionsorte 2 (Löcher 17 im Heizdeckel 16).

Die Maskierung muss aber nicht unbedingt formtreu und/oder größentreu sein. Beispielsweise können die Blendenöffnungen (Blenden-Arrayelemente) auch nicht kreisrund sein. So kann man beispielsweise die beiden Blendenbilder (Bild der Blende des Beleuchtungssystems (Beleuchtungspupille des Anregungslichts 9) und Bild der Blende des Detektionssystems (Detektionspupille der Fluoreszenz-Signale 7) pro Kanal auch durch ein gemeinsames, umbeschriebenes Rechteck maskieren. Dies vermindert die Anforderung an die Fertigungsgenauigkeit und verschlechtert das Kanalübersprechen nur unwesentlich.

Die Arrayoptikanordnung 18 weist also in einer solchen Ausgestaltung ein Blendenarray 23 auf, das eine Maske für die Beleuchtungspupillen des Anregungslichts 9 und die Detektionspupillen der Fluoreszenz-Signale 7 bildet. Dabei ist in dem dargestellten Ausführungsbeispiel das Blendenarray 23 zwischen dem Feldlinsenarray 19 und dem Pupillenlinsenarray 21 angeordnet. Das Blendenarray 23 könnte aber auch zwischen dem Pupillenlinsenarray 21 und der Anordnung einer Vielzahl von Detektionsorten 2 (Heizdeckel 16) angeordnet sein, hierbei vorzugsweise nahe an dem Pupillenlinsenarray 21.

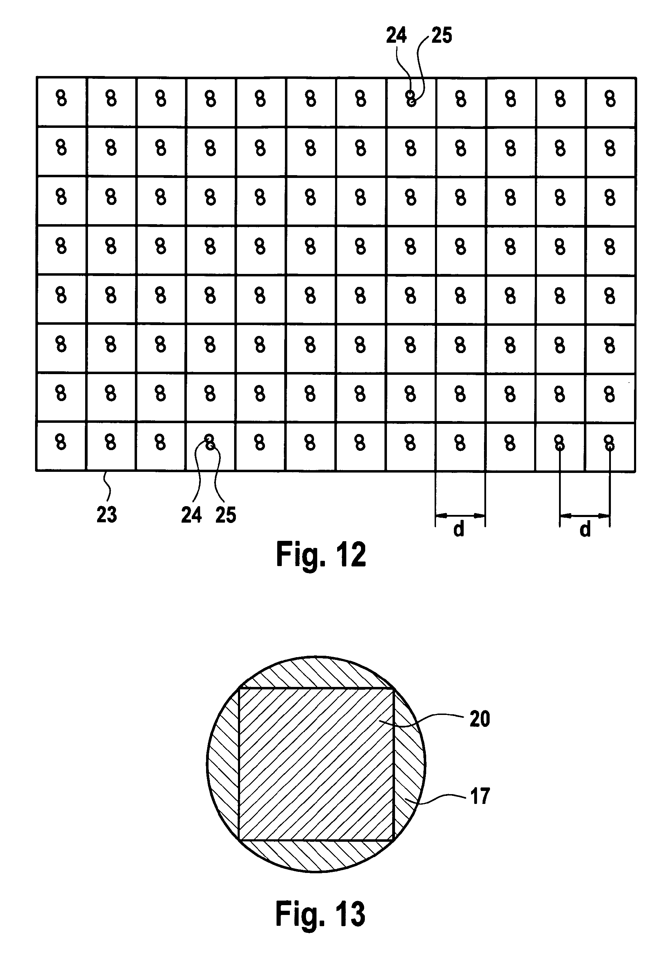

Die Figur 12 zeigt exemplarisch eine Aufsicht auf ein solches Blendenarray 23, bei dem jedes Blenden-Arrayelement aus einem Paar von Blendenöffnung 24, 25 gebildet wird. Das dargestellte Blendenarray 23 ist also mit 96 Paaren von Blendenöffnungen 24, 25 versehen ist, die jeweils einem der 96 Detektionsorte 2 zugeordnet sind. Dabei sind die Blendenöffnungspaare derart angeordnet, dass jeweils eine erste Blendenöffnung 24 eines Blendenöffnungspaares das Anregungslicht 9 für einen Detektionsort 2 hindurchläßt und eine zweite Blendenöffnung 25 des Blendenöffnungspaares die Fluoreszenz-Signale 7 von dem Detektionsort 2 hindurchläßt. Der Verlauf der gedachten Linien, die die oben erläuterten Quadrate mit einer Kantenlänge entsprechend dem Lochabstand d und der Fläche AQ begrenzen, ist zur Veranschaulichung ebenfalls dargestellt. Bei realen Blendenarrays 23 sind diese Linien in der Regel nicht vorhanden.

Die wesentliche Aufgabe des Blendenarrays 23 ist die Unterdrückung von Übersprechen zwischen den verschiedenen Kanälen der Arrayoptikanordnung 18. Das Übersprechen kann durch interne Reflexe (gerichtetes Störlicht) oder ungerichtetes, diffuses Streulicht in der Arrayoptikanordnung 18, insbesondere im Pupillenlinsenarray 21, entstehen. Die Gesamtfläche der Löcher 24, 25 im Blendenarray 23 ist offensichtlich sehr viel kleiner als die Gesamtfläche des Blendenarrays 23. Dadurch wird eine sehr effektive Trennung von Nutz- und Störlicht erzielt, und zwar bereits sehr nahe am Entstehungsort der Fluoreszenz-Signale 7, den Detektionsorten 2, und somit früh im Detektionsstrahlengang, was sehr vorteilhaft für die optische Detektion ist. Das Verhältnis dieser Flächen kann wiederum als Füllfaktor interpretiert werden. Die Wirksamkeit des Blendenarrays 23 bezüglich der Unterdrückung von Übersprechen steigt mit sinkendem Füllfaktor.

Wesentliche Merkmale der Erfindung und vorteilhafter Weiterbildungen lassen sich kurz wie folgt zusammenfassen: Die Arrayoptikanordnung 18 besteht aus einem Feldlinsenarray 19 und einem Pupillenlinsenarray 21 sowie vorzugsweise aus einem zusätzlichen Blendenarray 23. Das Feldlinsenarray 19 erzeugt Beleuchtungspupillen und Detektionspupillen, jeweils entsprechend der Anzahl der Detektionsorte 2 (in dem Beispiel jeweils 96). Das Blendenarray 23 maskiert diese Pupillen (in dem Beispiel 192) zur Vermeidung von örtlichem Übersprechen. Das Pupillenlinsenarray 21 bildet das Feldlinsenarray 19 auf die Detektionsorte 2 (die Multiwellplatte) ab. Bezüglich der Beleuchtung erhöht die Arrayoptikanordnung 18 den Füllfaktor (Packungsdichte) der Detektionsorte 2 (Wells). Bezüglich der Detektion erhöht die Arrayoptikanordnung 18 die numerische Apertur. Aus der Geometrie ergibt sich nominell ein Signalgewinn (hier um den Faktor 9).

Die Feldlinsen-Arrayelemente 20 des Feldlinsenarrays 19 müssen nicht notwendigerweise mit runder Berandung ausgeführt werden. In einer bevorzugten Ausführungsform sind die Feldlinsen-Arrayelemente 20 quadratisch. Die Figur 13 zeigt ein Bild eines quadratischen Feldlinsen-Arrayelements 20 in einem kreisrunden Loch 17 des Heizdeckels 16. Bei quadratischer Berandung mit einer Kantenlänge, die dem Lochabstand d im Heizdeckel 16 entspricht (hier 9 mm) kann man alle Feldlinsen-Arrayelemente 20 lückenlos, d.h. ohne für die optische Abbildung ungenutzte Zwischenräume zwischen den Feldlinsen-Arrayelementen 20, aneinander fügen. Wählt man nun wie in Figur 13 dargestellt den Abbildungsmaßstab $\beta_Q$ so, dass die vier Ecken der Feldlinsen-Arrayelemente 20 auf die kreisförmigen unteren Ränder der Löcher 17 des Heizdeckels 16, d.h. auf die kreisförmigen Ränder der Vielzahl der Detektionsorte 2 abgebildet werden, so gilt für den Anteil $\eta'_{AQ}$ des genutzten Anregungslichtes 9:

$$\eta'_{AQ} = 100\%$$

Offensichtlich findet weder am Feldlinsenarray 19 noch am Blendenarray 23 noch am Heizdeckel 16 eine Abschattung statt.

Der Gewinnfaktor $g_{AQ}$ der Arrayoptikanordnung 18 mit quadratischen Feldlinsen-Arrayelementen 20 für die Fluoreszenzanregung ist das Verhältnis von $\eta'_{AQ}$ zu $\eta_A$:

$$g_{AQ} = \eta'_{AQ} \Big/ \eta_A = 3,82 > g_A$$

Der Abbildungsmaßstab $\beta_Q$ ist durch das Verhältnis der Diagonale ($\sqrt{2} \cdot d$) des quadratischen Feldlinsen-Arrayelements 20 zum Durchmesser D des Loches 17 im Heizdeckel 16 gegeben:

$$\beta_Q = \sqrt{2} \cdot d \Big/ D = 2,45$$

Im Falle der quadratischen Feldlinsen-Arrayelemente 20 beträgt die numerische Apertur $NA'_Q$ am Ort des Heizdeckels 16:

$$NA'_Q = \beta_Q \cdot NA = 0,034$$

Der mit Hilfe der Arrayoptikanordnung 18 von der Detektionsoptik erfasste Raumwinkel $\Omega'_{DQ}$ beträgt in diesem Fall:

$$\Omega'_D = 2\pi \cdot \left(1 - \sqrt{1 - NA'^2_Q}\right) = 4,0 \cdot 10^{-3}$$

Der Anteil $\eta'_{DQ}$ des mit der Arrayoptikanordnung 18 genutzten Fluoreszenzlichtes beträgt somit:

$$\eta'_D = \Omega_{DQ} \Big/ \Omega_{tot} = 2,9 \cdot 10^{-4}$$

Der Gewinnfaktor $g_{DQ}$ mit der Arrayoptikanordnung 18 für die Fluoreszenzdetektion ist im Gegensatz zum Fall der runden Feldlinsen-Arrayelemente nicht mehr durch das bloße Verhältnis von $\eta'_{DQ}$ zu $\eta_D$ gegeben. Es gilt vielmehr zu berücksichtigen, dass nicht die ganze Kreisfläche des Loches 17, sondern nur das einbeschriebene Quadrat auf den optischen Sensor 6 abgebildet wird. Das quadratische Feldlinsen-Arrayelement 20 wirkt als entsprechende Feldblende. Es gilt somit:

$$g_{DQ} = \eta'_{DQ} \Big/ \eta_D \cdot \frac{2}{\pi} = 3,82$$

Der gesamte Gewinnfaktor $g_{tot,Q}$ der Arrayoptikanordnung 18 ist das Produkt der Gewinnfaktoren für die Fluoreszenzanregung $g_{AQ}$ und die Fluoreszenzdetektion $g_{QD}$:

$$g_{tot,Q} = g_{AQ} \cdot g_{DQ} = 14,6$$

Dieser Wert ist erheblich größer als der gesamte Gewinnfaktor $g_{tot}$ bei runden Feldlinsen-Arrayelementen 20 von 9,0 (siehe oben). Wie bereits erwähnt wirken die unteren kreisrunden Ränder der Löcher 17 des Heizdeckels 16 als ein Array von Feldblenden, wenn man die Arrayoptikanordnung 18 so auslegt, dass diese formtreu auf die Ränder von rund gestalteten Feldlinsen-Arrayelementen 20 abgebildet werden.

Im Falle quadratischer Feldlinsen-Arrayelemente 20 entfällt somit die Feldblendenwirkung des Heizdeckels 16. Dies ist gleichbedeutend mit dem Umstand, dass das Licht, das zwischen Kreis und Quadrat in Figur 13 entspringt, auf vier benachbarte Feldlinsen-Arrayelemente 20 trifft. Diese Feldlinsen-Arrayelemente 20 können dieses Licht jedoch nicht auf den optischen Sensor 6 weiterleiten. Aus Sicht der Nachbarkanäle stammt dieses Licht nämlich aus der falschen Aperturblende in der Arrayoptikanordnung 18, die relativ zur Aperturblende des Nachbarkanals weit dezentriert ist. Somit erhalten Strahlen, die auf benachbarte Feldlinsen-Arrayelemente 20 treffen, so große Aperturwinkel, dass sie von der Detektionsoptik nicht auf direktem Weg erfasst werden können.

Dieses nicht direkt detektierbare Fluoreszenzlicht kann höchstens durch Vielfachreflexe oder durch Streuung in der Detektionsoptik auf den optischen Sensor 6 fallen. Dieser Signalanteil wäre prinzipiell schädlich, da er mit sehr hoher Wahrscheinlichkeit einem falschen Kanal zugeordnet werden würde. In praktischen Erprobungen und mittels eines rechenintensiven, nicht-sequentiellen Raytracings konnte jedoch für die Quantifizierung dieses Störlichtanteils gezeigt werden, dass er praktisch unbedeutend und vernachlässigbar ist.

Die Abbildung der Ecken der Feldlinsen-Arrayelemente 20 auf den Rand des Loches 17 im Heizdeckel 16 stellt hinsichtlich des Gewinnfaktors einen Grenzfall dar. Die vier Ecken der Feldlinsen-Arrayelemente 20 werden auf oder innerhalb die kreisförmigen unteren Ränder der Löcher 17 des Heizdeckels 16, d.h. auf die kreisförmigen Ränder der Vielzahl der Detektionsorte 2 abgebildet. Wenn man den Abbildungsmassstab $\beta_Q$

$$\beta_Q < \sqrt{2} \cdot d \Big/ D = 2,45$$

wählt, bleibt der gesamte Gewinnfaktor $g_{tot,Q}$ konstant. Die nutzbare Quadratfläche sinkt zwar, der damit verbundene Verlust wird durch die steigende numerische Apertur aber genau ausgeglichen. Im umgekehrten Fall sinkt der Gewinnfaktor jedoch, da einerseits die numerische Apertur sinkt, die Quadratfläche aber nicht entsprechend zunimmt. Letztere wird dann durch das Loch 17 im Heizdeckel 16 beschnitten.

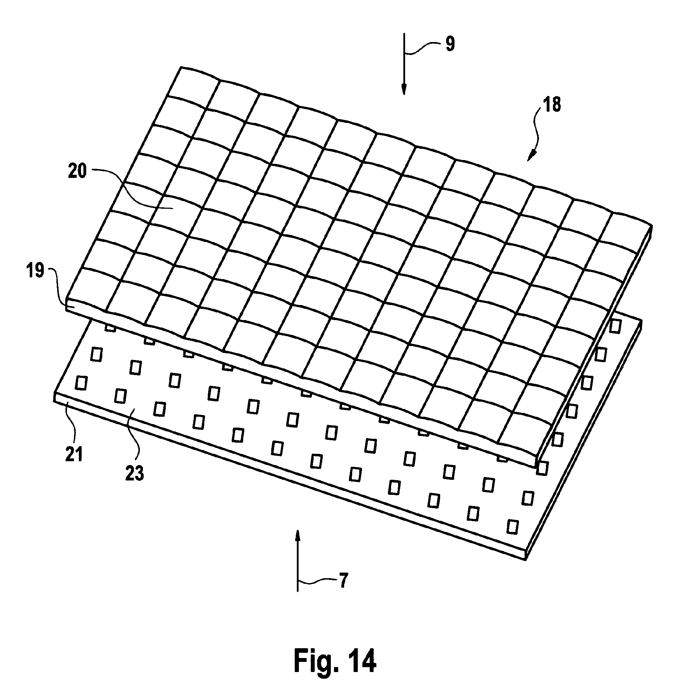

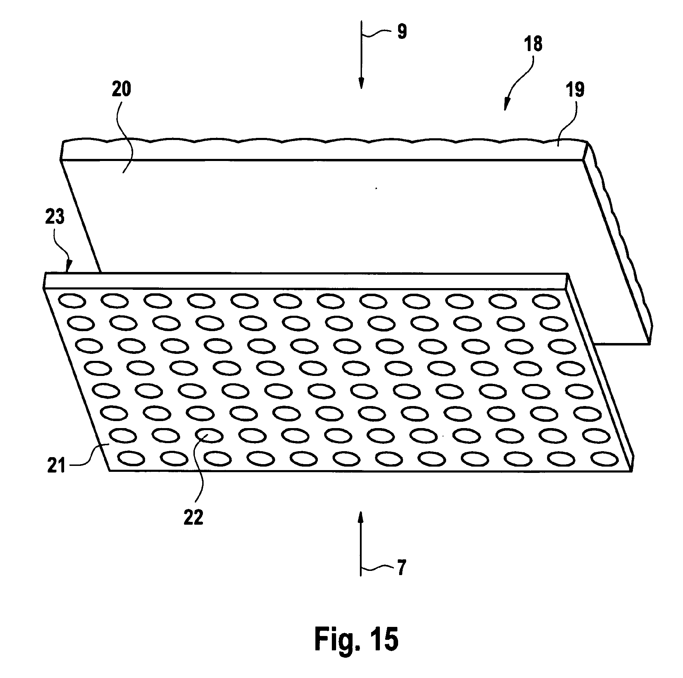

Die Figur 14 zeigt eine solche Arrayoptikanordnung 18 mit quadratisch berandeten Feldlinsen-Arrayelementen 20 in einer Ansicht von "oben", d.h. von der Seite des Anregungslichts 9, und die Figur 15 zeigt die Arrayoptikanordnung 18 von Figur 14 in einer Ansicht von "unten", d.h. von der Seite der Fluoreszenz-Signale 7. Die Blenden-Arrayelemente (Blendenöffnungen in dem Blendenarray 23) sind hier so ausgebildet, dass sie eine rechteckige Form haben und pro Kanal des Feldlinsenarrrays 22, d.h. pro Feldlinsen-Arrayelement 20 und zugehörigem Pupillenlinsen-Arrayelement 22, jeweils nur eine Blendenöffnung vorhanden ist, d.h. eine Blendenöffnung gemeinsam für das Anregungslicht 9 und die Fluoreszenz-Signale 7 des Kanals.

Die weitere Ausgestaltung eines erfindungsgemäßen optischen Geräts 1 mit in dieser Anmeldung nicht angesprochenen Merkmalen kann entsprechend zum Stand der Technik, insbesondere gemäß der EP 1 681 555 B1 oder EP 1 681 556 B1 erfolgen, deren Offenbarungsgehalte ausdrücklich einbezogen werden. Insbesondere können in bevorzugten Ausführungsformen folgende vorteilhafte Merkmale realisiert werden:

a) Die Feldlinse 8 ist so angeordnet ist, dass sie Anregungslicht 9 mit einem Einfallswinkel $\alpha$ zum ebenen Träger 4 der Anordnung einer Vielzahl von einzelnen Detektionsorten 2 erzeugt, der größer als 0° ist. Genauer ausgedrückt ist $\alpha$ der Winkel zwischen den Achsen von Beleuchtungs- und Detektionssystem. Eine der beiden Achsen wird durch den Spiegel oder Strahlteiler 14 geknickt.

b) Das optisches Gerät 1 umfasst einen Spiegel oder Strahlteiler 14, der für mindestens eine Anregungsfrequenz transparent und für die Frequenzen der Fluoreszenz-Signale 7 reflektierend ist oder einen Strahlteiler 14, der für mindestens eine Anregungsfrequenz reflektierend und für die Frequenzen der Fluoreszenz-Signale 7 transparent ist

c) Der Einfallswinkel $\alpha$ des Anregungslichts 9 ist kleiner als 20°, vorzugsweise kleiner als 10° und am meisten bevorzugt kleiner als 5°.

d) Für den Einfallswinkel $\alpha$ gilt

$$\alpha \geq \theta_1 + \theta_2$$

wobei $\theta_1$ der halbe Öffnungswinkel der Anregungsoptik und $\theta_2$ der halbe Öffnungswinkel der Abbildungsoptik ist.

e) Die Abbildungslinsenanordnung 11 ist mit dem optischen Sensor gekoppelt und bildet eine Abbildungseinheit 15.

f) Das optisches Gerät 1 umfasst eine Lichtstrahlenfalteinheit, umfassend einen, zwei oder mehrere Faltspiegel, wobei die Falteinheit so angeordnet ist, dass sie Licht von der Lichtquelle 5 und Fluoreszenz-Signale 7 von der Anordnung einer Vielzahl von einzelnen Detektionsorten 2 faltet.

g) Die einzelnen Detektionsorte 2 der Anordnung stellen Wells dar, das Anregungslicht 9 ist zu den Seitenwänden der Wells parallel und die Lösung, die die Wells füllt, enthält fluoreszierende Farbstoffe.

h) Die einzelnen Detektionsorte 2 der Anordnung stellen Wells dar, das Anregungslicht 9 hat einen Winkel von weniger als 20° in Bezug auf die Seitenwände der Wells und die Lösung, die die Wells füllt, enthält fluoreszierende Farbstoffe.

i) Die einzelnen Detektionsorte 2 der Anordnung sind Stellen auf einem ebenen Träger 4 und auf diesen Stellen sind fluoreszierende Farbstoffe aufgebracht.

Bezugszeichenliste

| | |
|---|---|
| 1 | Optisches Gerät |
| 2 | Detektionsorte |
| 3 | Haltevorrichtung |
| 4 | Ebener Träger |
| 5 | Lichtquelle |
| 6 | Optischer Sensor |
| 7 | Fluoreszenz-Signale |
| 8 | Feldlinse |
| 9 | Anregungslicht |
| 10 | Anregungslinsenanordnung |
| 11 | Abbildungslinsenanordnung |
| 12 | Anregungsfiltersystem |
| 13 | Abbildungsfiltersystem |
| 14 | Strahlteiler |
| 15 | Abbildungseinheit |

| 16 | Heizdeckel |
|---|---|
| 17 | Loch |
| 18 | Arrayoptikanordnung |
| 19 | Feldlinsenarrray |
| 20 | Feldlinsen-Arrayelement |
| 21 | Pupillenlinsenarray |
| 22 | Pupillenlinsen-Arrayelement |
| 23 | Blendenarray |
| 24 | erste Blendenöffnung in 23 |
| 25 | zweite Blendenöffnung in 23 |
| 26 | Lochbild |
| 27 | axiale Kurve |
| 28 | außeraxiale Kurve |
| 29 | Einhüllende |
| $\alpha$ | Einfallswinkel |
| $\theta$ | Aperturwinkel |
| $A_L$ | Fläche Loch (Objekt) |
| $A_{LB}$ | Fläche Loch (Bild) |
| $A_Q$ | Fläche Quadrat |
| d | Lochabstand |
| D | Lochdurchmesser |
| h | Strahlhöhe |
| NA | numerische Apertur |

Literaturliste

Bernard, P. S., et al., Anal. Biochem. 255 (1998) 101-107
DE 101 31 687
DE 101 55 142
DE 102 00 499
DE 197 48 211 A1
EP 1 275 954 A2
EP 1 681 555 B1
EP 1 681 556 B1
JP 2002014044
Matthews, J. A. und Kricka, L. J., Anal. Biochem. 169 (1988) 1-25
US 2002/0005493 A1
US 2002/159057
US 2003/0011772 A1
US 5,118,801
US 5,538,848
US 6,246,525 B1
US 6,498,690 B1
WO 02/14555
WO 03/069391
WO 97/46707
WO 97/46712
WO 97/46714
WO 99/60381

**Patentansprüche**

1. Optisches Gerät (1) zum Abbilden von Fluoreszenz-Signalen (7) von einer Anordnung einer Vielzahl einzelner Detektionsorte (2), umfassend

- eine Haltevorrichtung (3) zum Halten eines ebenen Trägers (4) mit einer Anordnung einer Vielzahl einzelner Detektionsorte (2);
- mindestens eine Lichtquelle (5) zum Ausstrahlen von Licht mit mindestens einer Anregungsfrequenz;
- einen optischen Sensor (6), der so angeordnet ist, dass er Fluoreszenz-Signale (7) von der Anordnung einer Vielzahl einzelner Detektionsorte (2) empfängt, und der so ausgebildet ist, dass er computerlesbare Primärdaten erzeugt;
- eine Feldlinse (8), die so angeordnet ist, dass sie Anregungslicht (9) von der Lichtquelle (5) zu der Anordnung einer Vielzahl einzelner Detektionsorte (2) und Fluoreszenz-Signale (7) von der Anordnung einer Vielzahl einzelner Detektionsorte (2) zum optischen Sensor (6) überträgt;
- eine Anregungslinsenanordnung (10), die so angeordnet ist, dass sie Anregungslicht (9) von der Lichtquelle (5) zur Feldlinse (8) überträgt; und
- eine Abbildungslinsenanordnung (11), die so angeordnet ist, dass sie Fluoreszenz-Signale (7) von der Feldlinse (8) zum optischen Sensor (6) überträgt;

**dadurch gekennzeichnet, dass**
das optische Gerät (1) eine Arrayoptikanordnung (18) umfasst,

- die ein Feldlinsenarray (19) mit Feldlinsen-Arrayelementen (20) und ein Pupillenlinsenarray (21) mit Pupillenlinsen-Arrayelementen (22) umfasst,
- wobei die Arrayoptikanordnung (18) im Strahlengang zwischen der Feldlinse (8) und der Anordnung einer Vielzahl einzelner Detektionsorte (2) angeordnet ist.

2. Optisches Gerät (1) nach Anspruch 1, **dadurch gekennzeichnet, dass** in der Arrayoptikanordnung (18) jeweils ein aus einem Feldlinsen-Arrayelement (20) und einem Pupillenlinsen-Arrayelement (22) gebildetes Linsenpaar jeweils einem der Detektionsorte (2) zugeordnet ist.

3. Optisches Gerät (1) nach einem der vorhergehenden Ansprüche, **dadurch gekennzeichnet, dass** das Pupillenlinsenarray (21) das Feldlinsenarray (19) auf die Vielzahl der Detektionsorte (2) abbildet.

4. Optisches Gerät (1) nach seinem der vorhergehenden Ansprüche, **dadurch gekennzeichnet, dass** das Feldlinsenarray (19) Beleuchtungspupillen für das Anregungslicht (9) und Detektionspupillen für die Fluoreszenz-Signale (7) erzeugt.

5. Optisches Gerät (1) nach einem der vorhergehenden Ansprüche, **dadurch gekennzeichnet, dass** die Vielzahl der Detektionsorte (2) einen Durchmesser (D) aufweisen und in einem Abstand (d) zueinander angeordnet sind, und dass der Abbildungsmaßstab ($\beta$) der Pupillenlinsen-Arrayelemente (22) gleich dem Verhältnis von Abstand (d) zu Durchmesser (D) ist.

6. Optisches Gerät (1) nach einem der vorhergehenden Ansprüche, **dadurch gekennzeichnet, dass** die Arrayoptikanordnung (18) ein Blendenarray (23) aufweist, das eine Maske für die Beleuchtungspupillen des Anregungslichts (9) und die Detektionspupillen der Fluoreszenz-Signale (7) bildet, wobei das Blendenarray (23) Blenden-Arrayelemente aufweist, die jeweils eine oder mehrere Blendenöffnungen umfassen, und wobei jedes Blenden-Arrayelement jeweils einem Feldlinsen-Arrayelement (20) und einem Pupillenlinsen-Arrayelement (23) zugeordnet ist und eine Maske für den Strahlengang durch das jeweilige Feldlinsen-Arrayelement (20) und Pupillenlinsen-Arrayelement (23) bildet.

7. Optisches Gerät (1) nach Anspruch 6, **dadurch gekennzeichnet, dass** das Blendenarray (23) zwischen dem Feldlinsenarray (19) und dem Pupillenlinsenarray (21) oder zwischen dem Pupillenlinsenarray (21) und der Anordnung einer Vielzahl von Detektionsorten (2) angeordnet ist.

8. Optisches Gerät (1) nach einem der Ansprüche 6 bis 7, **dadurch gekennzeichnet, dass** das Blendenarray (23) mit Paaren von Blendenöffnungen (24, 25) versehen ist, die jeweils einem der Detektionsorte (2) zugeordnet sind, wobei die Blendenöffnungspaare derart angeordnet sind, dass jeweils eine erste Blendenöffnung (24) eines Blendenöffnungspaares das Anregungslicht (9) für einen Detektionsort (2) hindurchläßt und eine zweite Blendenöffnung (25) des Blendenöffnungspaares die Fluoreszenz-Signale (7) von dem Detektionsort (2) hindurchläßt.

9. Optisches Gerät (1) nach einem der vorhergehenden Ansprüche, **dadurch gekennzeichnet, dass** der Strahlengang des Anregungslichts (9) und der Strahlengang der Fluoreszenz-Signale (7) von der Vielzahl einzelner Detektionsorte (2) auf der Objektseite der Feldlinse (8) telezentrisch sind, d.h. zwischen der Feldlinse (8) und dem Feldlinsenarray (19).

10. Optisches Gerät (1) nach einem der vorhergehenden Ansprüche, **dadurch gekennzeichnet, dass** die Feldlinsen-Arrayelemente (20) rund oder quadratisch sind.

11. Optisches Gerät (1) nach Anspruch 10, **dadurch gekennzeichnet, dass** die Feldlinsen-Arrayelemente (20) quadratisch sind, die Vielzahl der Detektionsorte (2) einen Durchmesser (D) aufweisen und in einem Abstand (d) zueinander angeordnet sind, die vier Ecken der Feldlinsen-Arrayelemente (20) auf oder innerhalb die kreisförmigen Ränder der Vielzahl der Detektionsorte (2) abgebildet werden, und dass der Abbildungsmaßstab ($\beta_Q$) der Pupillen-linsen-Arrayelemente (22) gleich oder kleiner dem Verhältnis der Diagonale ($\sqrt{2} \cdot d$) der quadratischen Feldlinsen-Arrayelemente (20) zu dem Durchmesser (D) ist.

12. Optisches Gerät (1) zum Abbilden von Chemilumineszenz- oder Biolumineszenz-Signalen von einer Anordnung einer Vielzahl einzelner Detektionsorte (2), umfassend

   - eine Haltevorrichtung (3) zum Halten eines ebenen Trägers (4) mit einer Anordnung einer Vielzahl einzelner Detektionsorte (2);
   - einen optischen Sensor (6), der so angeordnet ist, dass er Chemilumineszenz- oder Biolumineszenz-Signale von der Anordnung einer Vielzahl einzelner Detektionsorte (2) empfängt, und der so ausgebildet ist, dass er computerlesbare Primärdaten erzeugt;
   - eine Feldlinse (8), die so angeordnet ist, dass sie Chemilumineszenz- oder Biolumineszenz-Signale von der Anordnung einer Vielzahl einzelner Detektionsorte (2) zum optischen Sensor (6) überträgt;
   - eine Abbildungslinsenanordnung (11), die so angeordnet ist, dass sie Chemilumineszenz- oder Biolumineszenz-Signale von der Feldlinse (8) zum optischen Sensor (6) überträgt;

   **dadurch gekennzeichnet, dass**
   das optische Gerät (1) eine Arrayoptikanordnung (18) umfasst,

   - die ein Feldlinsenarray (19) mit Feldlinsen-Arrayelementen (20) und ein Pupillenlinsenarray (21) mit Pupillenlinsen-Arrayelementen (22) umfasst,
   - wobei die Arrayoptikanordnung (18) im Strahlengang zwischen der Feldlinse (8) und der Anordnung einer Vielzahl einzelner Detektionsorte (2) angeordnet ist.

13. Echtzeit-PCR-Gerät umfassend

   - ein optisches Gerät (1) nach einem der Ansprüche 1 bis 12;
   - Mittel zum Heizen und Kühlen eines Trägers (4) mit einem oder mehreren Wells, von denen jeder ein Reaktionsgemisch enthält, das zu einer PCR-Reaktion in der Lage ist.

14. Analytisches System zum gleichzeitigen Durchführen und Überwachen mehrerer PCR-Reaktionen in Echtzeit, umfassend

   - eine Multiwell-Platte als eine Anordnung einer Vielzahl einzelner Detektionsorte (2), von denen jeder ein Reaktionsgemisch enthält, das zu einer PCR-Reaktion in der Lage ist;
   - fluoreszierende DNA-Bindungseinheiten;
   - ein Echtzeit-PCR-Gerät nach Anspruch 13, umfassend ein optisches Gerät (1) nach einem der Ansprüche 1 bis 12 zum Beleuchten der Vielzahl einzelner Detektionsorte (2) der Multiwell-Platte mit Licht, vorzugsweise mit telezentrischem Licht, und zum Erfassen der Fluoreszenz-Signale von jedem Well der Multiwell-Platte durch einen optischen Sensor (6), der so angeordnet ist, dass er die entsprechenden Fluoreszenz-Signale (7) empfangen kann, um computerlesbare Primärdaten zu erzeugen.

15. Verfahren zum Amplifizieren, Detektieren und/oder Quantifizieren einer Vielzahl von DNA-Zielsequenzen, umfassend

   - Bereitstellen einer Zusammensetzung oder eines Reaktionsgemisches, das in der Lage ist, PCR-Reaktionen durchzuführen;
   - Behandeln des Reaktionsgemisches gemäß einem thermozyklischen Protokoll, so dass eine Amplifikation der Vielzahl von DNA-Zielsequenzen stattfinden kann; und

- Ermitteln des Vorhandenseins und der Anzahl von jeder DNA-Sequenz mindestens einmal nach mehreren Amplifikationszyklen unter Benutzung von fluoreszierenden DNA-Bindungseinheiten und eines Echtzeit-PCR-Gerätes nach Anspruch 13.

**Fig. 1**

9

17

16

d

D

7

**Fig. 2**

Fig. 3

Fig. 4

**Fig. 6**

**Fig. 5**

**Fig. 7**

**Fig. 8**

**Fig. 9**

Fig. 10

**Fig. 11**

24 ⟋25

| 8 | 8 | 8 | 8 | 8 | 8 | 8 | 8 | 8 | 8 | 8 | 8 |
|---|---|---|---|---|---|---|---|---|---|---|---|
| 8 | 8 | 8 | 8 | 8 | 8 | 8 | 8 | 8 | 8 | 8 | 8 |
| 8 | 8 | 8 | 8 | 8 | 8 | 8 | 8 | 8 | 8 | 8 | 8 |
| 8 | 8 | 8 | 8 | 8 | 8 | 8 | 8 | 8 | 8 | 8 | 8 |
| 8 | 8 | 8 | 8 | 8 | 8 | 8 | 8 | 8 | 8 | 8 | 8 |
| 8 | 8 | 8 | 8 | 8 | 8 | 8 | 8 | 8 | 8 | 8 | 8 |
| 8 | 8 | 8 | 8 | 8 | 8 | 8 | 8 | 8 | 8 | 8 | 8 |
| 8 | 8 | 8 | 8 | 8 | 8 | 8 | 8 | 8 | 8 | 8 | 8 |

23        24  25          d          d

## Fig. 12

20

17

## Fig. 13

**Fig. 14**

**Fig. 15**

Europäisches
Patentamt

European
Patent Office

Office européen
des brevets

# EUROPÄISCHER RECHERCHENBERICHT

**Nummer der Anmeldung**

EP 08 01 3392

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/098279 A (APPLERA CORP [US]) 27. November 2003 (2003-11-27) * Zusammenfassung * * Absätze [0036] - [0043], [0059], [0072] - [0074] * * Ansprüche 8,53 * * Abbildung 2 * ----- | 1-15 | INV. G01N21/64 G02B21/06 G02B3/00 G02B21/16 G02B21/08 |
| D,X | DE 197 48 211 A1 (ZEISS CARL FA [DE]) 6. Mai 1999 (1999-05-06) * Zusammenfassung * * Spalte 1, Zeile 63 - Spalte 4, Zeile 40 * * Abbildungen 1,2 * ----- | 1-15 | |
| X | US 2006/291048 A1 (OLSZAK ARTUR G [US] ET AL) 28. Dezember 2006 (2006-12-28) * Zusammenfassung * * Absätze [0009], [0034] - [0045], [0050] - [0052] * * Abbildungen 2,4-8 * ----- | 1-15 | |
| X | DE 100 17 824 A1 (TILL I D GMBH [DE]) 18. Oktober 2001 (2001-10-18) * Zusammenfassung * * Absätze [0014], [0017] - [0021] * * Abbildung 1 * ----- | 1,12 | **RECHERCHIERTE SACHGEBIETE (IPC)** G02B G01N |
| X | WO 2004/074820 A (APPLERA CORP [US]; OLDHAM MARK [US]; YOUNG EUGENE [US]) 2. September 2004 (2004-09-02) * Zusammenfassung * * Absätze [0026] - [0030], [0045] - [0050], [0053] - [0057] * * Abbildungen 1-3 * ----- | 1,12 | |
| X | DE 199 19 092 A1 (ZEISS CARL JENA GMBH [DE]) 2. November 2000 (2000-11-02) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Berlin | 29. Oktober 2008 | Moroz, Alexander |

EPO FORM 1503 03.82 (P04C03)

EP 2 148 187 A1

**ANHANG ZUM EUROPÄISCHEN RECHERCHENBERICHT
ÜBER DIE EUROPÄISCHE PATENTANMELDUNG NR.**

EP 08 01 3392

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-10-2008

| Im Recherchenbericht angeführtes Patentdokument | Datum der Veröffentlichung | Mitglied(er) der Patentfamilie | Datum der Veröffentlichung |
|---|---|---|---|
| WO 03098279 A | 27-11-2003 | AU 2003243268 A1<br>AU 2003243281 A1<br>EP 1511990 A2<br>EP 1511991 A2<br>JP 2005526252 T<br>JP 2005526254 T<br>WO 03098277 A2 | 02-12-2003<br>02-12-2003<br>09-03-2005<br>09-03-2005<br>02-09-2005<br>02-09-2005<br>27-11-2003 |
| DE 19748211 A1 | 06-05-1999 | AU 9749898 A<br>CA 2307837 A1<br>WO 9923474 A1<br>EP 1027591 A1<br>JP 2002514739 T<br>US 6686582 B1 | 24-05-1999<br>14-05-1999<br>14-05-1999<br>16-08-2000<br>21-05-2002<br>03-02-2004 |
| US 2006291048 A1 | 28-12-2006 | KEINE | |
| DE 10017824 A1 | 18-10-2001 | KEINE | |
| WO 2004074820 A | 02-09-2004 | KEINE | |
| DE 19919092 A1 | 02-11-2000 | AT 338944 T<br>WO 0065325 A2<br>EP 1173747 A2<br>HK 1045368 A1<br>JP 2002543378 T | 15-09-2006<br>02-11-2000<br>23-01-2002<br>09-03-2007<br>17-12-2002 |

EPO FORM P0461

Für nähere Einzelheiten zu diesem Anhang : siehe Amtsblatt des Europäischen Patentamts, Nr.12/82

37

**IN DER BESCHREIBUNG AUFGEFÜHRTE DOKUMENTE**

**In der Beschreibung aufgeführte Patentdokumente**

- WO 03069391 A
- DE 10200499
- US 2002159057 A
- DE 10131687
- DE 10155142
- US 20020005493 A1
- EP 1275954 A2
- US 20030011772 A1
- DE 19748211 A1
- WO 9960381 A
- JP 2002014044 B
- US 6498690 B1

- US 6246525 B1
- EP 0987540 A
- EP 1406082 A
- EP 1681555 B1
- EP 1681556 B1
- US 5118801 A
- US 5538848 A
- WO 0214555 A
- WO 9746707 A
- WO 9746712 A
- WO 9746714 A

**In der Beschreibung aufgeführte Nicht-Patentliteratur**

- **Bernard, P. S. et al.** *Anal. Biochem.,* 1998, vol. 255, 101-107

- **Matthews, J. A. ; Kricka, L. J.** *Anal. Biochem.,* 1988, vol. 169, 1-25